# EUROPEAN PATENT APPLICATION

(11) **EP 4 823 136 A1**
(43) Date of publication of application: **14.10.2026**
(21) Application number: 24911338.2
(22) Date of filing: 26.12.2024
(51) Int. Cl.: H04W 8/00

(54) **SAMPLE DETERMINATION METHOD AND APPARATUS**

(30) Priority: 27.12.2023 CN 202311840523
(71) Applicant: Huawei Technologies Co., Ltd., Shenzhen, Guangdong 518129 (CN)
(72) Inventor: GUO, Tao, Shenzhen, Guangdong 518129 (CN); WU, Yizhuang, Shenzhen, Guangdong 518129 (CN)
(74) Representative: Körber, Martin Hans
(86) International application number: PCT/CN2024/142747
(87) International publication number: WO 2025/140417

(57) **Abstract**

This application provides a sample determining method and apparatus, to assist a vertical federated entity in performing a vertical federated learning task. The method includes: A first network element obtains a first identifier of a terminal in a first terminal set of a first application function of a vertical federated alliance, where the terminal in the first terminal set is a terminal that is supported by the first application function and that is used for a task of the vertical federated alliance. The first network element obtains a second identifier of a terminal in a second terminal set of a second application function of the vertical federated alliance, where the terminal in the second terminal set is a terminal that is supported by the second AF and that is used for a task of the vertical federated alliance. The first network element determines, based on the first identifier of the terminal in the first terminal set and the second identifier of the terminal in the second terminal set, a first terminal that is common to both the first terminal set and the second terminal set, where data of the first terminal is used as a sample for a task of the vertical federated alliance.

## Description

### CROSS-REFERENCE TO RELATED APPLICATIONS

This application claims priority to Chinese Patent Application No. 202311840523.2, filed with the China National Intellectual Property Administration on December 27, 2023 and entitled "SAMPLE DETERMINING METHOD AND APPARATUS", which is incorporated herein by reference in its entirety.

### TECHNICAL FIELD

This application relates to the field of mobile communication technologies, and in particular, to a sample determining method and apparatus.

### BACKGROUND

Participating entities (for example, network elements in a vertical federated alliance) of a vertical federated learning task need to perform sample alignment among all parties participating in a vertical federated task. To be specific, different entities perform training and/or inference on data in a same range. Currently, the 3rd generation partnership project (3rd generation partnership project, 3GPP) supports training and/or inference through a vertical federated learning task, to implement mobile network-related analytics services.

Currently, how to assist a vertical federated entity in performing a vertical federated learning task is an urgent technical problem to be resolved.

### SUMMARY

This application provides a sample determining method and apparatus, to assist a vertical federated entity in performing a vertical federated learning task.

According to a first aspect, a sample determining method is provided. The method may be implemented by a first network element or a component in the first network element. The first network element may also be referred to as a communication apparatus, a network device, or the like. The first network element is, for example, a network data analytics function (network data analytics function, NWDAF), a network exposure function (network exposure function, NEF), or a repository network element. The repository network element may be a unified data management (unified data management, UDM), a unified data repository (unified data repository, UDR), or an analytics data repository function (analytics data repository function, ADRF). The component in this application may include, for example, at least one of a chip, a chip system, a processor, a transceiver, a processing unit, or a transceiver unit. For example, the method is performed by the first network element. The method may be implemented through the following steps: The first network element obtains a first identifier of a terminal in a first terminal set of a first application function of a vertical federated alliance, where the terminal in the first terminal set is a terminal that is supported by the first application function and that is used for a task of the vertical federated alliance. The first network element obtains a second identifier of a terminal in a second terminal set of a second application function of the vertical federated alliance, where the terminal in the second terminal set is a terminal that is supported by the second application function and that is used for a task of the vertical federated alliance. The first network element determines, based on the first identifier of the terminal in the first terminal set and the second identifier of the terminal in the second terminal set, a first terminal that is common to both the first terminal set and the second terminal set. Data of the first terminal is used as a sample for a task of the vertical federated alliance. In other words, the data of the first terminal is used for the task of the vertical federated alliance.

According to the method shown in the first aspect, the first network element may obtain the first identifier of the terminal in the first terminal set and the second identifier of the terminal in the second terminal set, and determine, based on the first identifier and the second identifier, the first terminal that is common to both the first terminal set and the second terminal set. The data of the first terminal may be used as a sample for the task of the vertical federated alliance. In this way, the sample can be efficiently determined. Therefore, the method may be used to assist a vertical federated entity in performing a vertical federated learning task.

Optionally, that "the first network element obtains a first identifier of a terminal in a first terminal set of a first application function of a vertical federated alliance" may be replaced with that "the first network element obtains a first identifier of a terminal in a first terminal set".

In a possible implementation, the first network element may determine a subscription permanent identifier (subscription permanent identifier, SUPI) of the terminal in the first terminal set based on the first identifier of the terminal in the first terminal set, determine an SUPI of the terminal in the second terminal set based on the second identifier of the terminal in the second terminal set, and determine the first terminal based on the SUPI of the terminal in the first terminal set and the SUPI of the terminal in the second terminal set.

In this application, the first identifier and the second identifier of the terminal are identifiers used by the terminal outside a core network, and the first identifier of the terminal in the first application function is different from the second identifier of the terminal in the second application function. Therefore, it is difficult to accurately determine a same terminal through comparison only based on the first identifier and the second identifier. According to this implementation, the first network element may convert the first identifier of the terminal in the first terminal set into the SUPI of the terminal, and convert the second identifier of the terminal in the second terminal set into the SUPI. Therefore, the first terminal that is common to both the first terminal set and the second terminal set may be accurately determined based on the SUPIs. In this application, the SUPI may alternatively be replaced with a GPSI and a third identifier. The third identifier may be an identifier used to identify a terminal that supports a learning task of the vertical federated alliance. To be specific, the terminal that supports the task of the vertical federated alliance may be represented by the third identifier in different application functions. The third identifier is, for example, a VFL UE ID.

In a possible implementation, the first network element may further send the first identifier of the first terminal to the first application function, and/or send the second identifier of the first terminal to the second application function.

According to this implementation, the first identifier/second identifier of the first terminal may be used for a task of the vertical federated alliance, for example, used to determine a terminal related to a learning task of the vertical federated alliance, in other words, used to select a sample. For example, the first identifier of the first terminal may be used for the first application function to select a sample, for example, used for the first application function to determine the data of the first terminal as a task sample. The second identifier of the first terminal may be used for the second application function to select a sample, for example, used for the second application function to determine the data of the first terminal as a task sample.

In a possible implementation, the first network element may further send, to the first application function and the second application function, a third identifier allocated to the first terminal.

According to this implementation, the third identifier of the first terminal may be used for a task of the vertical federated alliance, for example, used to determine a terminal related to a learning task of the vertical federated alliance, in other words, used to select a sample. Optionally, the first network element may send the first identifier and the third identifier of the first terminal to the first application function, to establish an association between the first terminal and the third identifier or the vertical federated alliance. Optionally, the first network element may send the second identifier and the third identifier of the first terminal to the second application function, to establish an association between the first terminal and the third identifier or the vertical federated alliance.

In a possible implementation, the first network element may further send the third identifier of the first terminal and/or at least one of the following information to a repository network element: an identifier of the vertical federated alliance; or an identifier of an analytics service corresponding to the vertical federated alliance; or information about an application function corresponding to the vertical federated alliance; or information about a public land mobile network (public land mobile network, PLMN) corresponding to the vertical federated alliance; or information about a device vendor corresponding to the vertical federated alliance; or the first identifier of the first terminal; or the second identifier of the first terminal.

According to this implementation, the first network element may indicate the third identifier of the first terminal to the repository network element, to indicate an association relationship between the third identifier of the first terminal and the first terminal and/or the vertical federated alliance.

In a possible implementation, the first network element may further send information about the vertical federated alliance to the first application function, where the information about the vertical federated alliance is used to determine the terminal in the first terminal set; and/or send information about the vertical federated alliance to the second application function, where the information about the vertical federated alliance is used to determine the terminal in the second terminal set.

According to this implementation, the first network element may request the first identifier of the terminal in the first terminal set from the first application function, and/or the first network element may request the second identifier of the terminal in the second terminal set from the second application function. The first application function may determine the terminal in the first terminal set based on the information about the vertical federated alliance, and the second application function may determine the terminal in the second terminal set based on the information about the vertical federated alliance, to accurately determine a sample.

In a possible implementation, the first network element may further send information about the vertical federated alliance to the repository network element, where the information about the vertical federated alliance is used to determine the terminal in the first terminal set and/or the terminal in the second terminal set; and the first network element may further receive the first identifier of the terminal in the first terminal set from the repository network element, and/or receive the second identifier of the terminal in the second terminal set from the repository network element.

According to this implementation, the first network element may request the first identifier of the terminal in the first terminal set and/or the second identifier of the terminal in the second terminal set from the repository network element. The repository network element may determine the terminal in the first terminal set and/or the terminal in the second terminal set based on the information about the vertical federated alliance, to accurately determine a sample.

In a possible implementation, the first network element may further receive information about the vertical federated alliance from a network data analytics function.

According to this implementation, the NWDAF may provide the information about the vertical federated alliance.

In a possible implementation, the information about the vertical federated alliance includes at least one of the following information: the identifier of the vertical federated alliance; or the identifier of the analytics service corresponding to the vertical federated alliance; or an identifier of the application function corresponding to the vertical federated alliance; or the PLMN corresponding to the vertical federated alliance; or information about the device vendor corresponding to the vertical federated alliance; or information about a terminal that is expected to be used for a task of the vertical federated alliance. The information about the terminal that is expected to be used for the task of the vertical federated alliance may include one or more of an SUPI, a first identifier, or a second identifier of the terminal that is expected to be used for the task of the vertical federated alliance.

According to this implementation, the information about the terminal that is expected to be used for the task of the vertical federated alliance may indicate the terminal that is expected to be used for the task of the vertical federated alliance, and the terminal may be a terminal to which data needed by the task belongs. Therefore, a terminal may be selected based on the information about the vertical federated alliance, to properly determine a sample. In this application, "expected" may alternatively be replaced with "requested", "specified", "candidate", "alternative", or "anticipated".

In a possible implementation, the information about the vertical federated alliance includes the information about the terminal that is expected to be used for the task of the vertical federated alliance, the information about the terminal that is expected to be used for the task of the vertical federated alliance includes the SUPI of the terminal that is expected to be used for the task of the vertical federated alliance, and the first network element may further determine, based on the SUPI of the terminal that is expected to be used for the task of the vertical federated alliance, the first identifier of the terminal that is expected to be used for the task of the vertical federated alliance and/or the second identifier of the terminal that is expected to be used for the task of the vertical federated alliance.

According to this implementation, if the information, obtained by the first network element, about the terminal that is expected to be used for the task of the vertical federated alliance is the SUPI of the terminal that is expected to be used for the task of the vertical federated alliance, the first network element may convert the SUPI of the terminal into the first identifier or the second identifier of the terminal that is expected to be used for the task of the vertical federated alliance, provide, for the first network element, the first identifier of the terminal that is expected to be used for the task of the vertical federated alliance, and provide, for a second network element, the second identifier of the terminal that is expected to be used for the task of the vertical federated alliance. The first identifier of the terminal that is expected to be used for the task of the vertical federated alliance may be used for the first application function to select the terminal in the first terminal set, to narrow down a range of the terminal in the first terminal set, and obtain a more accurate sample result. For example, the first application function may determine, from terminals that support the vertical federated alliance, a terminal whose first identifier belongs to the first identifier of the terminal that is expected to be used for the task of the vertical federated alliance, as the terminal in the first terminal set. Similarly, the second identifier of the terminal that is expected to be used for the task of the vertical federated alliance may be used for the second application function to select the terminal in the second terminal set.

In a possible implementation, the first network element may send, to the repository network element, the SUPI of the terminal that is expected to be used for the task of the vertical federated alliance; and receive, from the repository network element, the first identifier of the terminal that is expected to be used for the task of the vertical federated alliance and/or the second identifier of the terminal that is expected to be used for the task of the vertical federated alliance.

According to this implementation, the first network element may convert the SUPI into the first identifier and/or the second identifier through the repository network element.

In a possible implementation, the first network element may determine, based on a correspondence between the SUPI and the first identifier of the terminal that is expected to be used for the task of the vertical federated alliance, the first identifier of the terminal that is expected to be used for the task of the vertical federated alliance; and/or determine, based on a correspondence between the SUPI and the second identifier of the terminal that is expected to be used for the task of the vertical federated alliance, the second identifier of the terminal that is expected to be used for the task of the vertical federated alliance.

According to this implementation, the first network element may convert the SUPI into the first identifier based on the correspondence between the SUPI and the first identifier of the terminal, and/or the first network element may convert the SUPI into the second identifier based on the correspondence between the SUPI and the second identifier of the terminal.

In a possible implementation, the first network element may send the first identifier of the terminal in the first terminal set to a repository network element, and receive the SUPI of the terminal in the first terminal set from the repository network element; and/or the first network element sends the second identifier of the terminal in the second terminal set to a repository network element, and receives the SUPI of the terminal in the second terminal set from the repository network element.

According to this implementation, the first network element may convert the SUPI into the first identifier and/or the second identifier through the repository network element.

In a possible implementation, the first network element may determine, based on a correspondence between the first identifier and the SUPI of the terminal in the first terminal set, the SUPI corresponding to the first identifier of the terminal in the first terminal set; and/or the first network element may determine, based on a correspondence between the second identifier and the SUPI of the terminal in the second terminal set, the SUPI corresponding to the second identifier of the terminal in the second terminal set.

According to this implementation, the first network element may convert the SUPI into the first identifier based on the correspondence between the SUPI and the first identifier of the terminal, and/or the first network element may convert the SUPI into the second identifier based on the correspondence between the SUPI and the second identifier of the terminal.

According to a second aspect, a sample determining method is provided. The method may be implemented by a first application function or a component in the first application function. The first application function may also be referred to as a communication apparatus, a network device, or the like. The first application function is, for example, an application function (application function, AF). For example, the method is performed by the first application function. The method may be implemented through the following steps: sending a first identifier of a terminal in a first terminal apparatus, where the terminal in the first terminal set is a terminal that is supported by the first application function and that is used for a task of a vertical federated alliance; and receiving a first identifier of a first terminal from a network exposure function, where the first terminal is a terminal that is determined based on the first identifier of the first terminal in the first terminal set and a second identifier of a terminal in a second terminal set of a second application function of the vertical federated alliance and that is common to both the first terminal set and the second terminal set, and data of the first terminal is used as a sample for a task of the vertical federated alliance.

In a possible implementation, the first application function may further receive information about the vertical federated alliance, where the information about the vertical federated alliance is used to determine the terminal in the first terminal set.

In a possible implementation, the information about the vertical federated alliance includes at least one of the following information: an identifier of the vertical federated alliance; or an identifier of an analytics service corresponding to the vertical federated alliance; or an identifier of an application function (for example, including the first application function) corresponding to the vertical federated alliance; or a PLMN corresponding to the vertical federated alliance; or information about a device vendor corresponding to the vertical federated alliance.

In a possible implementation, the first application function may further receive a third identifier allocated to the first terminal.

Optionally, in the second aspect, the first application function may alternatively be replaced with the second application function, the first terminal set may alternatively be replaced with the second terminal set, and the first identifier may alternatively be replaced with the second identifier.

For beneficial effects of the second aspect and possible implementations of the second aspect, refer to the descriptions of the beneficial effects of the first aspect and corresponding implementations. Details are not described again.

According to a third aspect, a sample determining method is provided. The method may be implemented by a repository network element or a component in the repository network element. The repository network element may also be referred to as a communication apparatus, a network device, or the like. For example, the method is performed by the repository network element. The method may be implemented through the following steps: The repository network element obtains information about a vertical federated alliance. The repository network element determines a first identifier of a terminal in a first terminal set of a first application function based on the information about the vertical federated alliance, where the terminal in the first terminal set is a terminal that is supported by the first application function and that is used for a task of the vertical federated alliance. The repository network element determines a second identifier of a terminal in a second terminal set of a second application function based on the information about the vertical federated alliance, where the terminal in the second terminal set is a terminal that is supported by the second application function and that is used for a task of the vertical federated alliance. The repository network element determines, based on the first identifier of the terminal in the first terminal set and the second identifier of the terminal in the second terminal set, a first terminal that is common to both the first terminal set and the second terminal set, where data of the first terminal is used as a sample for a task of the vertical federated alliance.

According to this implementation, the repository network element may determine the first identifier of the terminal in the first terminal set of the first application function of the vertical federated alliance and the second identifier of the terminal in the second terminal set of the second application function based on the information about the vertical federated alliance. Alternatively, the first identifier and the second identifier may be determined by the repository network element. In addition, the repository network element may further determine, based on the first identifier and the second identifier, the first terminal that is common to both the first terminal set and the second terminal set. The data of the first terminal may be used as a sample for the task of the vertical federated alliance. In this way, the sample can be efficiently determined. Therefore, the method may be used to assist a vertical federated entity in performing a vertical federated learning task.

In a possible implementation, the repository network element may determine an SUPI of the terminal in the first terminal set based on the first identifier of the terminal in the first terminal set, determine an SUPI of the terminal in the second terminal set based on the second identifier of the terminal in the second terminal set, and determine the first terminal based on the SUPI of the terminal in the first terminal set and the SUPI of the terminal in the second terminal set.

According to this implementation, the repository network element may convert the first identifier of the terminal in the first terminal set into the SUPI of the terminal, and convert the second identifier of the terminal in the second terminal set into the SUPI. Therefore, the first terminal that is common to both the first terminal set and the second terminal set may be accurately determined based on the SUPIs.

In a possible implementation, the repository network element may receive the information about the vertical federated alliance from a network data analytics function; or receive the information about the vertical federated alliance from a network exposure function; or receive the information about the vertical federated alliance from the first application function; or receive the information about the vertical federated alliance from the second application function.

According to this implementation, the repository network element may obtain the information about the vertical federated alliance from the NWDAF, the NEF, the first application function, or the second application function.

In a possible implementation, the information about the vertical federated alliance includes at least one of the following information: an identifier of the vertical federated alliance; or an identifier of an analytics service corresponding to the vertical federated alliance; or an identifier of an application function corresponding to the vertical federated alliance; or a PLMN corresponding to the vertical federated alliance; or information about a device vendor corresponding to the vertical federated alliance; or information about a terminal that is expected to be used for a task of the vertical federated alliance.

According to this implementation, a terminal may be selected based on the information about the vertical federated alliance, to properly determine a sample.

In a possible implementation, the repository network element may further send the first identifier (or the first identifier and a third identifier) of the first terminal and an identifier of the first application function to the network exposure function, and the network exposure function may send the first identifier (or the first identifier and the third identifier) of the first terminal to the first application function based on the identifier of the first application function; and/or the repository network element may further send the second identifier (or the second identifier and a third identifier) of the first terminal and an identifier of the second application function to the network exposure function, and the network exposure function may send the second identifier (or the second identifier and the third identifier) of the first terminal to the second application function based on the identifier of the second application function.

According to this implementation, the first identifier/second identifier of the first terminal may be used for a task of the vertical federated alliance, for example, used to determine a terminal related to a learning task of the vertical federated alliance, in other words, used to select a sample. For example, the first identifier of the first terminal may be used for the first application function to select a sample, for example, used for the first application function to determine the data of the first terminal as a task sample. The second identifier of the first terminal may be used for the second application function to select a sample, for example, used for the second application function to determine the data of the first terminal as a task sample.

According to a fourth aspect, a sample determining method is provided. The method may be implemented by a first application function or a component in the first application function. The first application function may also be referred to as a communication apparatus, a network device, or the like. The first application function is, for example, an AF. For example, the method is performed by the first application function. The method may be implemented through the following steps: The first application function sends information about a vertical federated alliance, where the information about the vertical federated alliance is used to determine a first identifier of a first terminal in a first terminal set of the first application function, and an application function corresponding to the vertical federated alliance includes the first application function. The first application function may further receive a first identifier of a first terminal from a network exposure function, where the first terminal is a terminal that is determined based on the first identifier of the first terminal in the first terminal set and a second identifier of a terminal in a second terminal set of a second application function of the vertical federated alliance and that is common to both the first terminal set and the second terminal set, and data of the first terminal is used as a sample for a task of the vertical federated alliance.

In a possible implementation, the first application function may further receive a third identifier allocated to the first terminal.

In a possible implementation, the information about the vertical federated alliance includes at least one of the following information: an identifier of the vertical federated alliance; or an identifier of an analytics service corresponding to the vertical federated alliance; or an identifier of the application function corresponding to the vertical federated alliance; or a PLMN corresponding to the vertical federated alliance; or information about a device vendor corresponding to the vertical federated alliance.

Optionally, in the fourth aspect, the first application function may alternatively be replaced with the second application function, the first terminal set may alternatively be replaced with the second terminal set, and the first identifier may alternatively be replaced with the second identifier.

For beneficial effects of the fourth aspect and possible implementations of the fourth aspect, refer to the descriptions of the beneficial effects of the third aspect and corresponding implementations. Details are not described again.

According to a fifth aspect, a communication apparatus is provided. The apparatus may implement the method according to any one of the first aspect to the fourth aspect or the possible implementations of the first aspect to the fourth aspect. The apparatus has a function of the foregoing first network element, first network element, second network element, or repository network element. The apparatus is, for example, the first network element, the first network element, the second network element, or the repository network element, or is a functional module in the first network element, a functional module in the first network element, a functional module in the second network element, or a functional module in the repository network element.

In an optional implementation, the apparatus may include modules that are in a one-to-one correspondence with the methods/operations/steps/actions according to any one of the first aspect to the fourth aspect or the possible implementations of the first aspect to the fourth aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for the functional modules.

For example, when the apparatus is configured to perform the method described in any one of the first aspect to the fourth aspect, the apparatus may include the communication unit and the processing unit.

According to a sixth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to any one of the first aspect to the fourth aspect or the possible implementations of the first aspect to the fourth aspect.

In a possible implementation, the processor and the memory are integrated together.

In another possible implementation, the memory is located outside the communication apparatus.

The communication apparatus further includes a communication interface. The communication interface is used for the communication apparatus to communicate with another device, for example, send or receive data and/or a signal. For example, the communication interface may be a transceiver, a circuit, a bus, a module, or another type of communication interface.

According to a seventh aspect, a computer-readable storage medium is provided. The computer-readable storage medium is configured to store a computer program or instructions. When the computer program or the instructions are run, the method according to any one of the first aspect to the fourth aspect or the possible implementations of the first aspect to the fourth aspect is implemented.

According to an eighth aspect, a computer program product including instructions is provided. When the computer program product runs on a computer, the method according to any one of the first aspect to the fourth aspect or the possible implementations of the first aspect to the fourth aspect is implemented.

According to a ninth aspect, an embodiment of this application further provides a communication apparatus, configured to perform the method according to any one of the first aspect to the fourth aspect or the possible implementations of the first aspect to the fourth aspect.

According to a tenth aspect, a chip system is provided. The chip system includes a logic circuit (this may alternatively be understood as that the chip system includes a processor and the processor may include the logic circuit, or the like), and may further include an input/output interface. The input/output interface may be configured to input a message, or may be configured to output a message. The input/output interface may be a same interface. To be specific, the same interface can implement both a sending function and a receiving function. Alternatively, the input/output interface includes an input interface and an output interface. The input interface is configured to implement a receiving function, in other words, configured to receive a message. The output interface is configured to implement a sending function, in other words, configured to send a message. The logic circuit may be configured to perform an operation other than the sending and receiving functions in the method according to any one of the first aspect to the fourth aspect or the possible implementations of the first aspect to the fourth aspect. The logic circuit may be further configured to transmit a message to the input/output interface, or receive, from the input/output interface, a message from another communication apparatus. The chip system may be configured to implement the method according to any one of the first aspect to the fourth aspect or the possible implementations of the first aspect to the fourth aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to an eleventh aspect, a sample determining method is provided. The sample determining method may include the method according to any one of the first aspect or the possible implementations of the first aspect and the method according to any one of the second aspect or the possible implementations of the second aspect. Alternatively, the sample determining method may include the method according to any one of the third aspect or the possible implementations of the third aspect and the method according to any one of the fourth aspect or the possible implementations of the fourth aspect.

In an example of the sample determining method, if the sample determining method includes the method according to any one of the first aspect or the possible implementations of the first aspect and the method according to any one of the second aspect or the possible implementations of the second aspect, the method may include: A first application function sends a first identifier of a terminal in a first terminal apparatus to a first network element, where the terminal in the first terminal set is a terminal that is supported by the first application function and that is used for a task of a vertical federated alliance. A second application function sends a second identifier of a terminal in a second terminal apparatus to the first network element, where the terminal in the second terminal set is a terminal that is supported by the second application function and that is used for a task of the vertical federated alliance. Correspondingly, the first network element obtains the first identifier of the terminal in the first terminal set of the first application function of the vertical federated alliance, and the first network element obtains the second identifier of the terminal in the second terminal set of the second application function of the vertical federated alliance. The first network element determines, based on the first identifier of the terminal in the first terminal set and the second identifier of the terminal in the second terminal set, a first terminal that is common to both the first terminal set and the second terminal set, where data of the first terminal is used as a sample for a task of the vertical federated alliance. In other words, the data of the first terminal is used for the task of the vertical federated alliance.

In a possible implementation, the first network element may further determine an SUPI of the terminal in the first terminal set based on the first identifier of the terminal in the first terminal set, determine an SUPI of the terminal in the second terminal set based on the second identifier of the terminal in the second terminal set, and determine the first terminal based on the SUPI of the terminal in the first terminal set and the SUPI of the terminal in the second terminal set.

In a possible implementation, the first network element may further send the first identifier of the first terminal to the first application function, and correspondingly, the first application function receives the first identifier of the first terminal; and/or the first network element may further send the second identifier of the first terminal to the second application function, and correspondingly, the second application function receives the second identifier of the first terminal.

In a possible implementation, the first network element may further send a third identifier of the first terminal to the first application function, and correspondingly, the first application function receives the third identifier of the first terminal; and/or the first network element may further send a third identifier of the first terminal to the second application function, and correspondingly, the second application function receives the third identifier of the first terminal.

In a possible implementation, the first network element may further send the third identifier of the first terminal and/or at least one of the following information to a repository network element: an identifier of the vertical federated alliance; or an identifier of an analytics service corresponding to the vertical federated alliance; or information about an application function corresponding to the vertical federated alliance; or information about a PLMN corresponding to the vertical federated alliance; or information about a device vendor corresponding to the vertical federated alliance; or the first identifier of the first terminal; or the second identifier of the first terminal.

In a possible implementation, the first network element may further send information about the vertical federated alliance to the first application function, where the information about the vertical federated alliance is used to determine the terminal in the first terminal set, and correspondingly, the first application function may receive the information about the vertical federated alliance; and/or send information about the vertical federated alliance to the second application function, where the information about the vertical federated alliance is used to determine the terminal in the second terminal set, and correspondingly, the second application function may receive the information about the vertical federated alliance.

In a possible implementation, the first network element may further send information about the vertical federated alliance to the repository network element, where the information about the vertical federated alliance is used to determine the terminal in the first terminal set and/or the terminal in the second terminal set. The repository network element may receive the information about the vertical federated alliance, and determine the terminal in the first terminal set and/or the terminal in the second terminal set based on the information about the vertical federated alliance. The repository network element may further send the first identifier of the terminal in the first terminal set and/or the second identifier of the terminal in the second terminal set to the first network element. The first network element may further receive the first identifier of the terminal in the first terminal set from the repository network element, and/or receive the second identifier of the terminal in the second terminal set from the repository network element.

In a possible implementation, a network data analytics function may provide information about the vertical federated alliance for the first network element. Correspondingly, the first network element may further receive the information about the vertical federated alliance from the network data analytics function.

In a possible implementation, the information about the vertical federated alliance includes at least one of the following information: the identifier of the vertical federated alliance; or the identifier of the analytics service corresponding to the vertical federated alliance; or an identifier of the application function corresponding to the vertical federated alliance; or the PLMN corresponding to the vertical federated alliance; or information about the device vendor corresponding to the vertical federated alliance; or information about a terminal that is expected to be used for a task of the vertical federated alliance.

In a possible implementation, the information about the vertical federated alliance includes the information about the terminal that is expected to be used for the task of the vertical federated alliance, and the information about the terminal that is expected to be used for the task of the vertical federated alliance includes an SUPI of the terminal that is expected to be used for the task of the vertical federated alliance. In this case, the first network element may further determine, based on the SUPI of the terminal that is expected to be used for the task of the vertical federated alliance, a first identifier of the terminal that is expected to be used for the task of the vertical federated alliance and/or a second identifier of the terminal that is expected to be used for the task of the vertical federated alliance. The first network element may further send, to the first application function, the first identifier of the terminal that is expected to be used for the task of the vertical federated alliance; and/or the first network element may send, to the second application function, the second identifier of the terminal that is expected to be used for the task of the vertical federated alliance.

In a possible implementation, the first network element may send, to the repository network element, the SUPI of the terminal that is expected to be used for the task of the vertical federated alliance. Correspondingly, the repository network element may obtain the SUPI of the terminal that is expected to be used for the task of the vertical federated alliance, and determine, based on the SUPI, the first identifier of the terminal that is expected to be used for the task of the vertical federated alliance and/or the second identifier of the terminal that is expected to be used for the task of the vertical federated alliance. The repository network element may further send, to the first network element, the first identifier of the terminal that is expected to be used for the task of the vertical federated alliance and/or the second identifier of the terminal that is expected to be used for the task of the vertical federated alliance. Correspondingly, the first network element may receive, from the repository network element, the first identifier of the terminal that is expected to be used for the task of the vertical federated alliance and/or the second identifier of the terminal that is expected to be used for the task of the vertical federated alliance.

In a possible implementation, the first network element may further determine, based on a correspondence between the SUPI and the first identifier of the terminal that is expected to be used for the task of the vertical federated alliance, the first identifier of the terminal that is expected to be used for the task of the vertical federated alliance; and/or determine, based on a correspondence between the SUPI and the second identifier of the terminal that is expected to be used for the task of the vertical federated alliance, the second identifier of the terminal that is expected to be used for the task of the vertical federated alliance.

In a possible implementation, the first network element may further send the first identifier of the terminal in the first terminal set to a repository network element; correspondingly, the repository network element may receive the first identifier of the terminal in the first terminal set, and determine the SUPI of the terminal in the first terminal set based on a correspondence between the first identifier and the SUPI of the terminal; the repository network element may further send the SUPI of the terminal in the first terminal set to the first network element; and correspondingly, the first network element may receive the SUPI of the terminal in the first terminal set from the repository network element. Additionally/Alternatively, the first network element sends the second identifier of the terminal in the second terminal set to the repository network element; correspondingly, the repository network element may receive the second identifier of the terminal in the second terminal set, and determine the SUPI of the terminal in the second terminal set based on a correspondence between the second identifier and the SUPI of the terminal; the repository network element may further send the SUPI of the terminal in the second terminal set to the first network element; and correspondingly, the first network element may receive the SUPI of the terminal in the second terminal set from the repository network element.

In an example of the sample determining method, if the sample determining method includes the method according to any one of the third aspect or the possible implementations of the third aspect and the method according to any one of the fourth aspect or the possible implementations of the fourth aspect, the method may include:

A network data analytics function, a network exposure function, a first application function, and/or a second application function send/sends information about a vertical federated alliance, and correspondingly, a repository network element obtains the information about the vertical federated alliance. The repository network element determines a first identifier of a terminal in a first terminal set of the first application function based on the information about the vertical federated alliance, where the terminal in the first terminal set is a terminal that is supported by the first application function and that is used for a task of the vertical federated alliance. The repository network element determines a second identifier of a terminal in a second terminal set of the second application function based on the information about the vertical federated alliance, where the terminal in the second terminal set is a terminal that is supported by the second application function and that is used for a task of the vertical federated alliance. The repository network element determines, based on the first identifier of the terminal in the first terminal set and the second identifier of the terminal in the second terminal set, a first terminal that is common to both the first terminal set and the second terminal set, where data of the first terminal is used as a sample for a task of the vertical federated alliance.

In a possible implementation, the repository network element may send the first identifier of the first terminal to the first application function, and correspondingly, the first application function obtains the first identifier of the first terminal; and/or the repository network element sends the second identifier of the first terminal to the second application function, and correspondingly, the second application function obtains the second identifier of the first terminal.

In a possible implementation, the repository network element may determine an SUPI of the terminal in the first terminal set based on the first identifier of the terminal in the first terminal set, determine an SUPI of the terminal in the second terminal set based on the second identifier of the terminal in the second terminal set, and determine the first terminal based on the SUPI of the terminal in the first terminal set and the SUPI of the terminal in the second terminal set.

In a possible implementation, the information about the vertical federated alliance includes at least one of the following information: an identifier of the vertical federated alliance; or an identifier of an analytics service corresponding to the vertical federated alliance; or an identifier of an application function corresponding to the vertical federated alliance; or a PLMN corresponding to the vertical federated alliance; or information about a device vendor corresponding to the vertical federated alliance; or information about a terminal that is expected to be used for a task of the vertical federated alliance.

In a possible implementation, the repository network element may further send the first identifier (or the first identifier and a third identifier) of the first terminal and an identifier of the first application function to the network exposure function, and the network exposure function may send the first identifier (or the first identifier and the third identifier) of the first terminal to the first application function based on the identifier of the first application function; and/or the repository network element may further send the second identifier (or the second identifier and a third identifier) of the first terminal and an identifier of the second application function to the network exposure function, and the network exposure function may send the second identifier (or the second identifier and the third identifier) of the first terminal to the second application function based on the identifier of the second application function.

According to a twelfth aspect, a communication system is provided. The communication system may include a first communication apparatus and a second communication apparatus. The first communication apparatus may be configured to implement the method according to any one of the first aspect or the possible implementations of the first aspect, and the second communication apparatus may be configured to implement the method according to any one of the second aspect or the possible implementations of the second aspect. Alternatively, the first communication apparatus may be configured to implement the method according to any one of the third aspect or the possible implementations of the third aspect, and the second communication apparatus may be configured to implement the method according to any one of the fourth aspect or the possible implementations of the fourth aspect.

For technical effects of the third aspect to the twelfth aspect, refer to the descriptions of the beneficial effects of corresponding solutions in the first aspect and the second aspect. Details are not described herein again.

### BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a diagram of a vertical federated alliance according to an embodiment of this application;
FIG. 4 is a schematic flowchart of a sample determining method according to an embodiment of this application;
FIG. 5 is a schematic flowchart of another sample determining method according to an embodiment of this application;
FIG. 6 is a schematic flowchart of another sample determining method according to an embodiment of this application;
FIG. 7 is a schematic flowchart of another sample determining method according to an embodiment of this application;
FIG. 8 is a schematic flowchart of another sample determining method according to an embodiment of this application;
FIG. 9 is a schematic flowchart of another sample determining method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

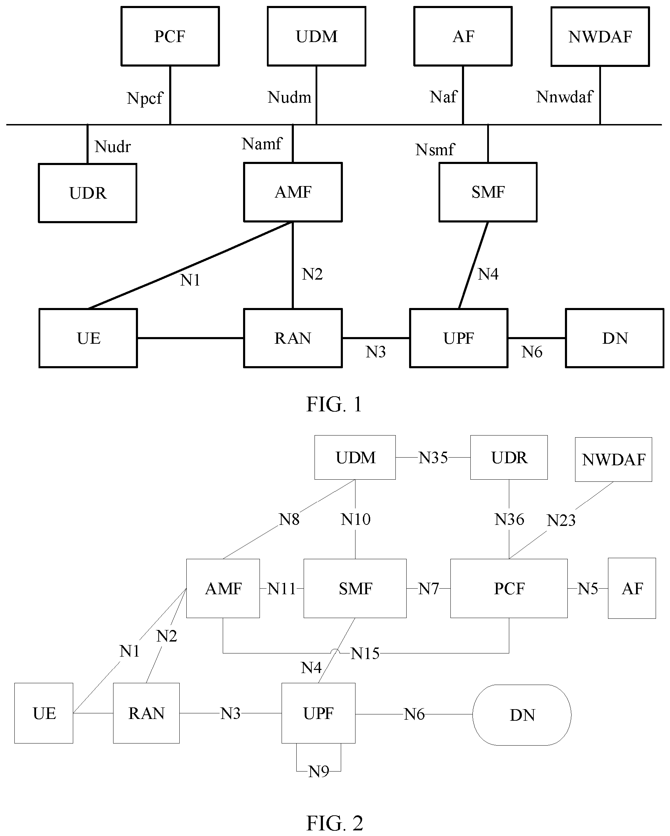

FIG. 1 is a diagram of a 5G network architecture based on a service-based architecture. The 5G network architecture shown in FIG. 1 may include a terminal device, an access network device, and a core network (core network, CN) device. The terminal device accesses a data network (data network, DN) through the access network device and the core network device. The core network device includes a plurality of network functions (network function, NF) or network elements, for example, includes a part or all of the following network elements: a UDM network element, a UDR network element, an NEF network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, an NWDAF network element, a network repository function (network repository function, NRF) network element (not shown in the figure), and a location management function (location management function, LMF) network element (not shown in the figure).

The access network device may be a radio access network (radio access network, RAN) device, for example, a base station (base station), an evolved NodeB (evolved NodeB, eNodeB), a transmission reception point (transmission reception point, TRP), a next-generation NodeB (next-generation NodeB, gNB) in a 5G mobile communication system, a next-generation base station in a 6th generation (the 6th generation, 6G) mobile communication system, a base station in a future mobile communication system, or an access node in a wireless fidelity (wireless fidelity, Wi-Fi) system; or may be a module or a unit for performing a part of functions of a base station, for example, a central unit (central unit, CU) or a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine type communication (machine type communication, MTC), internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer with a wireless transceiver function, a wearable device, a vehicle, an urban air transportation vehicle (for example, an uncrewed aerial vehicle or a helicopter), a ship, a robot, a robotic arm, a smart home device, or the like.

The access network device and the terminal device may be at fixed locations, or may be movable. The access network device and the terminal device may be deployed on land, including being deployed indoors or outdoors, or in a handheld or vehicle-mounted manner; or may be deployed on water; or may be deployed on an airplane, a balloon, or an artificial satellite in the air. Application scenarios of the access network device and the terminal device are not limited in embodiments of this application.

The following describes the core network device in this application.

The AMF network element includes functions of mobility management, access authentication/authorization, and the like. In addition, the AMF network element is also responsible for transferring a user policy between the terminal device and the PCF. The SMF network element includes functions of performing session management, executing a control policy delivered by the PCF, selecting a UPF, allocating an internet protocol (internet protocol, IP) address to the terminal device, and the like. The UPF network element serves as an interface to the data network, and includes functions of user plane data forwarding, session/flow-level charging statistics, bandwidth limiting, and the like. The UDM network element includes functions of subscription data management, user access authorization, and the like. The UDR network element includes a function of accessing subscription data, policy data, application data, and other types of data. The NEF network element is configured to support exposure of capabilities and events. The AF network element transfers a requirement of an application side for a network side, for example, a quality of service (quality of service, QoS) requirement or a user state event subscription. The AF may be a third-party functional entity or an application server deployed by an operator. The PCF network element includes policy control functions such as session-level or service flow-level charging, QoS bandwidth guarantee, mobility management, and policy decision for the terminal device. The NRF network element may be configured to provide a network element discovery function, and provide, according to a request from another network element, network element information corresponding to a network element type. The NRF network element further provides network element management services, for example, network element registration, updating, and deregistration, and network element state subscription and pushing.

The NWDAF network element is mainly configured to: collect data (including one or more of terminal device data, access network device data, core network element data, and third-party application device data), where the data may be data of the terminal device, the access network device, a core network element, or a third-party application device, or may be data of the terminal device on the access network device, the core network element, or the third-party application device; and then perform data analysis based on the collected data, and output a data analysis result for a network, a network management device, and an application to perform decision-making. The NWDAF may perform data analysis by using a machine learning model. The 3GPP splits a training function and an inference function of the NWDAF. One NWDAF may support only a model training function, or only a data inference function, or both a model training function and a data inference function. An NWDAF that supports the model training function may also be referred to as a training NWDAF or an NWDAF supporting a model training logical function (model training logical function, MTLF) (MTLF for short). The training NWDAF may perform model training based on obtained data to obtain a trained model. An NWDAF that supports the data inference function may also be referred to as an inference NWDAF or an NWDAF supporting an analytics logical function (analytics logical function, AnLF) (AnLF for short). The inference NWDAF may input, to the trained model, input data to obtain an analysis result or inference data. In embodiments of this application, the training NWDAF is an NWDAF that supports at least the model training function. In a possible implementation method, the training NWDAF may also support the data inference function. The Inference NWDAF is an NWDAF that supports at least the data inference function. In a possible implementation method, the inference NWDAF may also support the model training function. If an NWDAF supports both the model training function and the data inference function, the NWDAF may be referred to as a training NWDAF, an inference NWDAF, a training and inference NWDAF, or an NWDAF. In embodiments of this application, the NWDAF may be an independent network element, or may be integrated with another network element. For example, the NWDAF is disposed in the PCF network element or the AMF network element.

An ADRF network element may be simply referred to as an ADRF. The ADRF may be configured to store model-related data. The data may be generated by the AnLF. The ADRF may provide model-related data for an MTLF according to a request from the MTLF. The ADRF is not shown in FIG. 1 or FIG. 2.

The LMF network element is configured to manage location information of the terminal device, and may calculate or verify a location of the terminal device and/or estimate a speed of the terminal device, and provide estimation precision. The LMF network element may receive a location request from the AMF network element for the terminal device through an Nlmf interface. A granularity of the location of the terminal that is obtained by the LMF network element through calculation may be one or more of a longitude, a latitude, a height, a cell, or a global positioning system (global positioning system, GPS).

The DN is a network located outside an operator network. The operator network may access a plurality of DNs, and a plurality of services may be deployed in the DN, to provide a data service, a voice service, and/or the like for the terminal device. For example, the DN is a private network of a smart factory, a sensor installed in a workshop of the smart factory may be the terminal device, a control server for the sensor is deployed in the DN, and the control server may provide a service for the sensor. The sensor may communicate with the control server, to obtain an instruction of the control server, transmit collected sensor data to the control server according to the instruction, and the like. For another example, the DN is an internal office network of a company, a mobile phone or a computer of an employee of the company may be the terminal device, and the mobile phone or the computer of the employee may access information, data resources, and the like in the internal office network of the company.

It can be understood that the foregoing network elements are an example of an implementation. This application does not exclude that network elements or devices with the functions of the foregoing network elements have other names or other forms in a 6G or later wireless communication system.

In FIG. 1, Nudr, Npcf, Namf, Nudm, Nsmf, Naf, and Nnwdaf are service-based interfaces respectively provided by the UDR, the PCF, the AMF, the UDM, the SMF, the AF, and the NWDAF for invoking corresponding service-based operations. N1, N2, N3, N4, and N6 are interface sequence numbers. Meanings of the interface sequence numbers are as follows:
(1) N1 is an interface between the AMF network element and the terminal device, and may be configured to transfer non-access stratum (non-access stratum, NAS) signaling (for example, including a QoS rule from the AMF network element) and the like to the terminal device.
(2) N2 is an interface between the AMF network element and the access network device, and may be configured to transfer radio bearer control information and the like from a core network side to the access network device.
(3) N3 is an interface between the access network device and the UPF network element, and is mainly configured to transfer uplink and downlink user plane data between the access network device and the UPF network element.
(4) N4 is an interface between the SMF network element and the UPF network element, and may be configured to transfer information between a control plane and a user plane, including delivering a forwarding rule, a QoS rule, a traffic statistics rule, and the like from the control plane to the user plane, and reporting user plane information.
(5) N6 is an interface between the UPF network element and the DN, and is configured to transfer uplink and downlink user data flows between the UPF network element and the DN.

In addition, in the architecture shown in FIG. 1, Nadrf may serve as a service-based interface of the ADRF.

FIG. 2 is a diagram of a 5G network architecture based on point-to-point interfaces. For descriptions of functions of network elements in FIG. 2, refer to the descriptions of the functions of corresponding network elements in FIG. 1. Details are not described again. A main difference between FIG. 2 and FIG. 1 lies in: Interfaces between control plane network elements in FIG. 1 are service-based interfaces, and interfaces between control plane network elements in FIG. 2 are point-to-point interfaces.

In the architecture shown in FIG. 2, names and functions of interfaces between network elements in a core network are as follows:
(1) N5 is an interface between an AF network element and a PCF network element, and may be configured to deliver an application service request and report a network event.
(2) N7 is an interface between the PCF network element and an SMF network element, and may be configured to deliver control policies at a protocol data unit (protocol data unit, PDU) session granularity and a service data flow granularity.
(3) N8 is an interface between an AMF network element and a UDM network element, and may be used for the AMF network element to obtain access and mobility management-related subscription data and authentication data from the UDM network element, and used for the AMF network element to register current mobility management-related information of a terminal device with the UDM network element, and the like.
(4) N9 is a user plane interface between UPF network elements, and is configured to transfer uplink and downlink user data flows between the UPF network elements.
(5) N10 is an interface between the SMF network element and the UDM network element, and may be used for the SMF network element to obtain session management-related subscription data from the UDM network element, and used for the SMF network element to register current session-related information of the terminal device with the UDM network element, and the like.
(6) N11 is an interface between the SMF network element and the AMF network element, and may be configured to transfer PDU session tunnel information between an access network device and the UPF network element, transfer a control message to be sent to the terminal device, transfer radio resource control information to be sent to the access network device, and the like.
(7) N15 is an interface between the PCF network element and the AMF network element, and may be configured to deliver a terminal device policy and an access control-related policy.
(8) N23 is an interface between the PCF network element and an NWDAF network element, and the NWDAF network element may collect data in the PCF network element through the interface. It should be noted that the NWDAF network element may further have an interface to another device (for example, the AMF network element, the UPF network element, the access network device, or the terminal device). This is not completely shown in the figure.
(9) N35 is an interface between the UDM network element and a UDR network element, and may be used for the UDM network element to obtain user subscription data information from the UDR network element.
(10) N36 is an interface between the PCF network element and the UDR network element, and may be used for the PCF network element to obtain policy-related subscription data and application data-related information from the UDR network element.

It can be understood that the foregoing network elements or functions may be network elements in a hardware device, software functions running on dedicated hardware, or virtualized functions instantiated on a platform (for example, a cloud platform). In a possible implementation, the foregoing network elements or functions each may be implemented by one device, or may be implemented jointly by a plurality of devices, or may be implemented by one functional module in a device. This is not specifically limited in embodiments of this application.

In an implementation method, a data analytics network element in embodiments of this application may be the NWDAF network element, or may be a network element having the functions of the NWDAF network element in a future communication network, for example, a 6G network. For ease of description, an example in which the data analytics network element is the NWDAF network element is used below for description, and the NWDAF network element is simply referred to as an NWDAF.

In this application, the AnLF may be configured to perform inference, export analysis information, and expose an analytics service. Analysis may be exporting statistics information and/or performing prediction according to a request from an analytics consumer (consumer). The MTLF may be configured to train a machine learning ML model, and expose a new training service, for example, provide a trained ML model for the AnLF. In this application, for a process of obtaining model-related data, the AnLF may serve as a data producer (producer) network element denoted as NFp, and the MTLF may serve as a data consumer network element denoted as NFc.

Currently, the AnLF may request a model from the MTLF through a model subscription (MLModelProvision_Subscribe) service or message. The model may be obtained by the MTLF through training based on model-related data (for example, referred to as a sample). In addition, the AnLF may specify a data set (data set) by using a data set tag (data set tag), and the data set may include model-related data. Therefore, the data set tag may be used for marking a data set, in other words, marking model-related data. The data set tag may also be understood as a data set index or a data index. The MTLF may serve as a model-related data consumer network element to obtain data stored by a data producer network element in a data repository. The data producer network element may be the AnLF, and the data repository network element may be a network element for storing data, for example, the analytics data repository function (analytics data repository function, ADRF). In this application, related data may be understood as data used for a vertical federated learning task, for example, input data, training data, inference data, or sample data.

Specifically, the model-related data may include any one of model input data, model output data (for example, a prediction result or prediction data), model ground-truth data, and deviation data during prediction that are from the ADRF. The model input data may be used for training, to obtain a model. The model output data is, for example, a prediction result obtained based on the input data, or a model prediction result corresponding to the input data. The model ground-truth data may indicate a ground truth of output data corresponding to the model input data, and may also be referred to as a true result of the input data. The deviation data during prediction may identify a deviation between the prediction data and the ground-truth data. The model output data and the model ground-truth data may be used for accuracy monitoring and retraining and/or re-provisioning of the model. That is, the model may be obtained based on model training data. When the model is obtained through first training, the model may be obtained through training based on the model input data and the model ground-truth data. Alternatively, the model may be obtained by retraining a historical model based on the model-related data. The historical model is an existing model. The prediction data may be an output result of the model.

To train data from different domains, distributed model training may be implemented through vertical federated learning (Vertical Federated Learning, VFL). As a new machine learning technology, the VFL may be used for model training and inference in a case in which participants are unwilling to share raw data, and is applicable to a case in which training sample identifications (identification, ID) of participants greatly overlap and data features of the participants slightly overlap. In the VFL, different data features of a common sample of a plurality of participants are combined for federated learning, that is, training data of the participants is vertically divided. Therefore, the federated learning is referred to as the vertical federated learning.

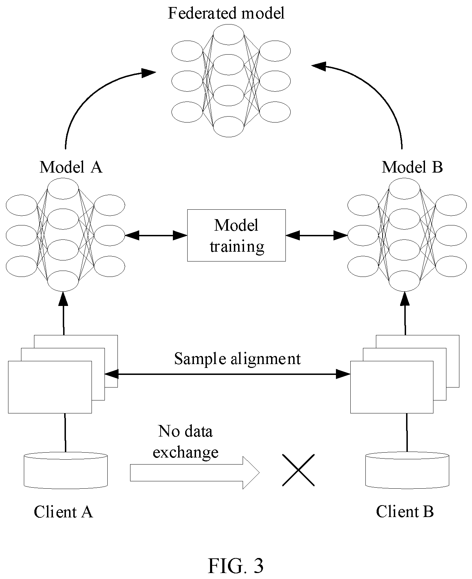

A linear regression algorithm is used as an example. A process of vertical federated learning-based training is shown in FIG. 3.

A client A (client A) has a data set ${\left\{{x}_{i}^{A}\right\}}_{i} ∈ {D}_{A}$, and a client B (client B) has a data set ${\left\{{x}_{i}^{B}, {y}_{i}\right\}}_{i} ∈ {D}_{B}$, where yᵢ is label data. A model to be trained is as follows: $h \left({x}_{i}\right) = {Θ}_{A} {x}_{i}^{A} + {Θ}_{B} {x}_{i}^{B}$ (Formula 1)

It is assumed that an objective function for linear regression is as follows: ${min}_{{Θ}_{A} , {Θ}_{B}} L$ (Formula 2)

L is a loss function, and the following holds: $L = {\sum }_{i} {\left‖{Θ}_{A}{x}_{i}^{A}+{Θ}_{B}{x}_{i}^{B}-{y}_{i}\right‖}^{2} + \frac{λ}{2} \left({\left‖{Θ}_{A}\right‖}^{2}+{\left‖{Θ}_{B}\right‖}^{2}\right)$ (Formula 3)

Because raw data D_{A} on the client A and D_{B} on the client B cannot be summarized, training cannot be performed based on a conventional centralized training method. However, training may be performed based on a vertical federated training method as follows:

Let ${μ}_{i}^{A} = {Θ}_{A} {x}_{i}^{A}$ and ${μ}_{i}^{B} = {Θ}_{B} {x}_{i}^{B}$. Then L is transformed as follows: $L = {\sum }_{i} {\left‖{μ}_{i}^{A}+{μ}_{i}^{B}-{y}_{i}\right‖}^{2} + \frac{λ}{2} \left({\left‖{Θ}_{A}\right‖}^{2}+{\left‖{Θ}_{B}\right‖}^{2}\right)$ (Formula 4)

Let ${L}_{A} = {\sum }_{i} \left({\left({μ}_{i}^{A}\right)}^{2}\right) + \frac{λ}{2} {\left‖{Θ}_{A}\right‖}^{2} , {L}_{B} = {\sum }_{i} \left({\left({μ}_{i}^{B}-{y}_{i}\right)}^{2}\right) + \frac{λ}{2} {\left‖{Θ}_{B}\right‖}^{2}$, and ${L}_{AB} = 2 {\sum }_{i} {μ}_{i}^{A} \left({μ}_{i}^{B}-{y}_{i}\right)$ . Then the following holds: $L = {L}_{A} + {L}_{B} + {L}_{AB}$ (Formula 5)

It is assumed that a residual is as follows: ${d}_{i} = {μ}_{i}^{A} + {μ}_{i}^{B} - {y}_{i}$. In this case, gradients of L with respect to Θ_{A} and Θ_{B} are as follows: $\frac{\partial L}{\partial {Θ}_{A}} = {\sum }_{i} {d}_{i} {x}_{i}^{A} + {λΘ}_{A}$ (Formula 6) $\frac{\partial L}{\partial {Θ}_{B}} = {\sum }_{i} {d}_{i} {x}_{i}^{B} + {λΘ}_{B}$ (Formula 7)

Correspondingly, model parameters are updated as follows: ${Θ}_{A} : = {Θ}_{A} + α \frac{\partial L}{\partial {Θ}_{A}}$ (Formula 8) ${Θ}_{B} : = {Θ}_{B} + α \frac{\partial L}{\partial {Θ}_{B}}$ (Formula 9)

Therefore, the process of vertical federated learning-based training is as follows:
Step 1: The client A and the client B initialize Θ_{A} and Θ_{B} respectively.
Step 2: The client A calculates ${μ}_{i}^{A}$ and L_{A} based on Θ_{A}, and then sends ${μ}_{i}^{A}$ and L_{A} to the client B.
Step 3: The client B calculates ${μ}_{i}^{B}$ based on Θ_{B}, further calculates dᵢ, L_{AB}, and L_{B} based on ${μ}_{i}^{A} , {μ}_{i}^{B}$, and yᵢ, and finally calculates L based on L_{A}, L_{AB}, and L_{B}. The client B sends dᵢ to the client A.
Step 4: The client A and the client B calculate $\frac{\partial L}{\partial {Θ}_{A}}$ and $\frac{\partial L}{\partial {Θ}_{B}}$ respectively based on dᵢ, and then update the model parameters Θ_{A} and Θ_{B} based on $\frac{\partial L}{\partial {Θ}_{A}}$ and $\frac{\partial L}{\partial {Θ}_{B}}$ respectively.

Step 2 to step 4 are cyclically performed until a model training end condition is met, for example, a quantity of iterations reaches a specified threshold (for example, 10000), or a value of the loss function L is less than a specified threshold (for example, 0.001).

According to the foregoing technology, exchange of raw data between domains is avoided, and a service experience model can also be obtained through training. After the training ends, for a group of data ( ${x}_{j}^{A} , {x}_{j}^{B}$), in an inference stage, the client A and the client B calculate local inference results ${Θ}_{A} {x}_{j}^{A}$ and ${Θ}_{B} {x}_{j}^{B}$ based on trained model parameters Θ_{A} and Θ_{B} respectively. Then the client A sends the local inference result ${Θ}_{A} {x}_{j}^{A}$ to the client B, and the client B finally determines an inference result ${Θ}_{A} {x}_{j}^{A} + {Θ}_{B} {x}_{j}^{B}$.

Currently, how a core network assists a participating entity of a vertical federated learning task in performing the vertical federated learning task is an urgent technical problem to be resolved. In this application, the participating entity of the vertical federated learning task includes the client A and the client B. Optionally, the participating entity of the vertical federated learning task may alternatively include more clients. This is not specifically limited. For example, the client A and the client B may be different AFs, or different NWDAFs, or an AF and an NWDAF respectively.

For example, a vertical federated alliance needs to analyze a network experience status of a terminal, and participants of the vertical federated alliance may include an NWDAF, an AF1, and an AF2. The terminal may be connected to the AF1 and/or the AF2 through a network. In a learning task of the vertical federated alliance, terminal-related data that may be provided or used by the NWDAF may include a configuration of the terminal in a core network, for example, a QoS configuration of the terminal. In addition, for the NWDAF, the terminal-related data may further include a delay between the terminal and the core network (for example, a UPF), or terminal-related network data collected by the UPF. For the AF, terminal-related data that may be provided or used by the AF includes network data generated when the terminal uses the AF or connects to the AF. The data is data generated or managed by the AF, but the data is not necessarily shared with the network. For example, the data includes application layer data, for example, data related to behavior or an action triggered by the terminal or an application; or a type, selected by the terminal, of data to be transmitted, where the type is, for example, voice, a video, or a game; or a service-related configuration of whether retransmission is needed.

That is, for the NWDAF, input data of the learning task may include terminal-related data of the NWDAF in the core network, for example, the QoS configuration of the terminal; and for the AF, input data of the learning task may include terminal-related data of the AF, for example, the network data generated when the terminal uses the AF or connects to the AF. Network experience analysis for the terminal is used as an example. Output data of the learning task of the vertical federated alliance may be a historical network experience status of the terminal, or a predicted future network experience status.

It can be understood that, when performing a task of the vertical federated alliance, the participants need to ensure that data related to a same terminal is used for model training or inference. If respective samples of the participants are not aligned, training or inference performance may be poor. The NWDAF may determine, based on a unique identifier of a terminal, a terminal to which sample data belongs.

This application provides a sample determining method, to assist a vertical federated entity in performing a vertical federated task. The method may be implemented by a first network element or by a module or a chip in the first network element. The first network element may be a core network element. For example, the first network element may be an NEF, an NWDAF, a repository network element, or another core network element. In this application, the repository network element may be any one of a UDM, a UDR, or an ADRF, or another network element with a data storage function. An example in which the repository network element is the UDM is used below for description.

It can be understood that a vertical federated alliance may be a professional group formed by two or more members (also referred to as participants) for the purpose of participating in a vertical federated activity or sharing resources with each other to achieve a common objective. Any member may be a natural person, a company, an organization, a network element entity (for example, an application function or a service), a network (for example, a PLMN or a CN), or the like, or a combination of any of the foregoing members. All or a part of the members of the alliance jointly participate in a vertical federated task. The vertical federated task is a task corresponding to vertical federated learning, and may include training and/or inference. The vertical federated task may also be referred to as a vertical federated activity or a vertical federated learning task, or simply referred to as a learning task or a federated task. In embodiments of this application, a plurality of AFs included in the vertical federated alliance may separately maintain respective data. For example, the AFs may respectively maintain terminal data of different terminals. An object of the vertical federated learning may be a terminal.

For the vertical federated task, the terminal data respectively included in the plurality of AFs in the vertical federated alliance may be used as a sample for the learning task. In the vertical federated learning, vertical federated members usually need to use data of a same object for training. Determining a sample for the vertical federated task may be understood as determining, by the vertical federated members, an object whose data is to be jointly used to perform the vertical federated task. For example, when the vertical federated task is PDU session (session) analysis for a terminal and the vertical federated members include a CN, an AF1, and an AF2, all of the CN, the AF1, and the AF2 need to use data of a same terminal to perform the vertical federated task. The AF1 and the AF2 may be connected to the CN. For example, the vertical federated members include an NF network element (for example, an NWDAF), an AF1, and an AF2 in a PLMN network. In this case, all of the NWDAF, the AF1, and the AF2 need to use data of a same terminal to perform the vertical federated task. The AF1 and the AF2 may be AFs in the PLMN network. For another example, the AF may alternatively be an AF outside a network, or may be a trusted AF (trusted AF) of a PLMN, or may be an untrusted AF (untrusted AF). That is, a relationship between the AF and the network is not limited. It can be understood that a relationship between the members in the vertical federated alliance is not limited either. In this application, the AF may serve as an application provider, for example, may be an application server (application server, AS) or an application-related network element entity.

In this application, the first network element may be configured to align samples of the AFs in the vertical federated alliance, to assist the vertical federated entity in performing the vertical federated learning task. In this application, a sample of an AF may be terminal data of the AF, for example, including application data of a terminal, PDU session-related data of a terminal, or traffic data of a terminal.

In this application, the vertical federated alliance may be identified or distinguished based on information about the vertical federated alliance. For example, the information about the vertical federated alliance includes at least one of the following: an identifier of the vertical federated alliance, an identifier of an analytics service corresponding to the vertical federated alliance, an identifier of an AF corresponding to the vertical federated alliance, information about a network corresponding to the vertical federated alliance, or information about a device vendor corresponding to the vertical federated alliance.

The identifier of the vertical federated alliance may indicate or identify the vertical federated alliance, and may be subsequently referred to as an alliance ID.

The identifier of the analytics service corresponding to the vertical federated alliance may indicate an analytics service supported by the vertical federated alliance. For example, the identifier of the analytics service is an analytics ID. The analytics ID is used as an example. The vertical federated alliance may correspond to one or more analytics IDs. The analytics ID may indicate, for example, an analytics service like terminal anomaly detection or terminal session analysis (for example, quality of service QoS analysis).

The identifier of the AF corresponding to the vertical federated alliance may indicate an AF supporting the vertical federated alliance. A first AF and a second AF in this application may support a same vertical federated alliance.

The information about the network corresponding to the vertical federated alliance may indicate a network supporting the vertical federated alliance, in other words, may indicate a network serving as a member of the federated alliance. For example, the network may be one or more PLMNs, or may be a network corresponding to one or more access modes.

The information about the device vendor corresponding to the vertical federated alliance may indicate a device vendor supporting the vertical federated alliance, in other words, may indicate a device vendor serving as a member of the federated alliance. For example, the information about the device vendor may be a device vendor identifier (vendor ID).

A data granularity supported by the vertical federated alliance indicates a granularity of data used in a current learning task. The data granularity may be a terminal granularity, an alliance identifier granularity, an analytics identifier granularity, an alliance member granularity, or the like. For example, the terminal granularity indicates that a sample used in the current learning task is terminal data within a specific range. For example, for the terminal granularity, the data granularity supported by the vertical federated alliance may indicate that the sample used in the current learning task is traffic data of the terminal in the AF, service data of the terminal in the AF, or the like.

It can be understood that the alliance ID corresponds to at least one of the following: the identifier of the analytics service corresponding to the vertical federated alliance, the identifier of the AF corresponding to the vertical federated alliance, the PLMN corresponding to the vertical federated alliance, or the information about the device vendor corresponding to the vertical federated alliance. Therefore, the alliance ID may indicate or may be used to determine at least one of the following: the identifier of the analytics service corresponding to the vertical federated alliance, the identifier of the AF corresponding to the vertical federated alliance, the PLMN corresponding to the vertical federated alliance, or the information about the device vendor corresponding to the vertical federated alliance. It can be understood that the AF corresponding to the vertical federated alliance and/or the network (for example, the PLMN) corresponding to the vertical federated alliance may serve as members/a member of the vertical federated alliance.

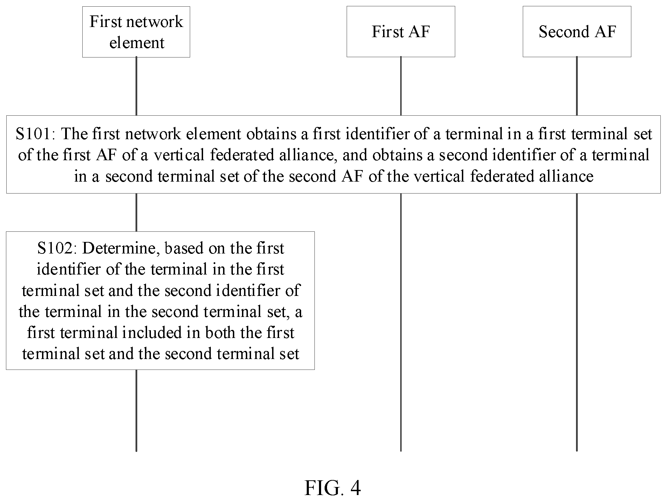

The sample determining method provided in this application is described below with reference to a process shown in FIG. 4. As shown in FIG. 4, the method may include the following steps.

S101: A first network element obtains a first identifier of a terminal in a first terminal set of a first AF of a vertical federated alliance, and obtains a second identifier of a terminal in a second terminal set of a second AF of the vertical federated alliance. The terminal in the first terminal set is a terminal supported, authorized, or allowed by the first AF to perform a task of the vertical federated alliance; or the terminal in the first terminal set supports, authorizes, or allows the first AF to use related data of the terminal for a task of the vertical federated alliance. The terminal in the second terminal set is a terminal supported, authorized, or allowed by the second AF to perform a task of the vertical federated alliance; or the terminal in the second terminal set supports, authorizes, or allows the second AF to use the terminal for a task of the vertical federated alliance.

It can be understood that a granularity at which the terminal supports, authorizes, or allows the first AF to use the related data of the terminal for the task of the vertical federated alliance may be a terminal granularity (to be specific, the first AF is supported in using the related data of the terminal for tasks of all vertical federated alliances), a vertical federated alliance granularity (to be specific, the first AF is supported in using the related data of the terminal for all tasks of one or more vertical federated alliances), or an analytics identifier granularity (to be specific, the first AF is supported in using the related data of the terminal for a task corresponding to one or more analytics identifiers of the vertical federated alliance).

S102: The first network element determines, based on the first identifier of the terminal in the first terminal set and the second identifier of the terminal in the second terminal set, a first terminal that is common to both the first terminal set and the second terminal set, where data of the first terminal is used as a sample for a task of the vertical federated alliance.

The first terminal may be an intersection set of the terminal in the first terminal set and the terminal in the second terminal set. Therefore, a sample of a terminal of the first AF can be aligned with a sample of a terminal of the second AF.

In this application, an AF terminal identifier, or referred to as an identifier of a terminal with respect to an AF, may be a terminal-related identifier allocated by a network to the AF, and is used for the AF and/or the network to manage the terminal. The AF terminal identifier may serve as an identifier of the terminal outside a core network. The AF terminal identifier may be allocated by a repository network element, the AF, or the like. For example, the AF terminal identifier may be registered by the AF with the repository network element or pre-allocated by a network element (for example, the repository network element) in the network. For example, the AF terminal identifier is an AF-specific terminal identifier (AF-specific UE ID), a generic public subscription identifier (generic public subscription identifier, GPSI), or an IP address or a media access control (media access control, MAC) address of the terminal; or the AF terminal identifier may be determined based on an AF-specific terminal identifier, a GPSI, an IP address, and/or a MAC address. Currently, the network may allocate different AF terminal identifiers to different AFs for a same terminal. This may be understood as that different AFs separately maintain the terminal. In other words, AF terminal identifiers of a same terminal in different AFs are different. For ease of distinguishing, an AF terminal identifier of the terminal of the first AF is referred to as the first identifier, and an AF terminal identifier of the terminal of the second AF is referred to as the second identifier. That is, a first identifier and a second identifier of a same terminal are different.

An AF terminal identifier of a terminal of an AF indicates that the AF may use related data (for example, sample data) corresponding to the AF terminal identifier to perform a vertical federated task, in other words, the AF is authorized by UE corresponding to the AF terminal identifier to use data of the UE to perform a vertical federated task. Alternatively, an AF terminal identifier of a terminal of an AF indicates that the AF may use, in a vertical federated task corresponding to the vertical federated alliance, related data corresponding to the AF terminal identifier.

In an example of S101, the first network element may obtain the first identifier of the terminal in the first terminal set from the first AF, and obtain the second identifier of the terminal in the first terminal set from the second AF. For example, the first network element may receive the first identifier from the first AF, and receive the second identifier from the second AF.

For example, in this example, the first network element may send a first request to the first AF and/or the second AF, to request the first identifier and/or the second identifier of the terminal of the vertical federated alliance. The first request may be a vertical federated alliance information obtaining request.

In a possible implementation, the first request may carry information about the vertical federated alliance, and the information is used for the first AF to determine the terminal in the first terminal set of the first AF, and/or used for the second AF to determine the terminal in the second terminal set of the second AF. To be specific, the information about the vertical federated alliance may be used for an AF to select a sample, and the AF may determine, based on subscription information of a terminal, a vertical federated alliance supported by the terminal, to determine a terminal that supports the vertical federated alliance indicated by the first request. The information about the vertical federated alliance may include one or more of the following: an identifier of the federated alliance, an identifier of an analytics service corresponding to the vertical federated alliance, an identifier of an AF corresponding to the vertical federated alliance, information about a network corresponding to the vertical federated alliance, or information about a device vendor corresponding to the vertical federated alliance.

For example, if the information about the vertical federated alliance includes the identifier of the federated alliance, the AF may query a terminal based on a vertical federated alliance supported by a terminal and the identifier of the federated alliance in the information about the vertical federated alliance, and a terminal obtained in a query result may serve as the terminal in the first terminal set and/or the terminal in the second terminal set.

If the information about the vertical federated alliance includes the identifier of the analytics service corresponding to the vertical federated alliance, the AF may query subscription information or configuration information of a terminal to determine an analytics service supported by the terminal, in other words, determine that the terminal or a user corresponding to the terminal allows the AF to use terminal-related data corresponding to the analytics service to perform a vertical federated learning task. The terminal-related data corresponding to the analytics service may be understood as data needed for the AF to perform the analytics service, and the data may serve as a sample of vertical federated training. Regarding a form in which the user allows the AF to use the terminal-related data corresponding to the analytics service to perform the vertical federated learning task, in a possible implementation, the AF obtains consent or authorization from the terminal through a protocol or through acknowledgement in a dynamic window. In another possible implementation, the terminal or the user allows, through preconfiguration, the AF to use the foregoing data to perform the vertical federated task. If the analytics service supported by the terminal or the analytics service that the terminal authorizes the AF to perform is consistent with the analytics service indicated by the identifier of the analytics service corresponding to the vertical federated alliance, the terminal may serve as the terminal in the first terminal set and/or the terminal in the second terminal set.

If the information about the vertical federated alliance includes the identifier of the AF corresponding to the vertical federated alliance, the first network element may request the AF to provide information about a terminal that supports a federated alliance task. The information about the terminal that supports the federated alliance task is, for example, an identifier of the terminal. The information about the terminal that supports the federated alliance task may be used to determine a sample for a vertical federated task. That is, a sample may be selected based on an AF terminal identifier.

If the information about the vertical federated alliance includes the information about the network (for example, a PLMN) corresponding to the vertical federated alliance, the AF may query subscription information of a terminal to determine a PLMN supported by the terminal. If the PLMN supported by the terminal is consistent with the information about the PLMN in the information about the vertical federated alliance, the terminal may serve as the terminal in the first terminal set and/or the terminal in the second terminal set.

If the information about the vertical federated alliance includes the information about the device vendor corresponding to the vertical federated alliance, the AF may query subscription information of a terminal to determine a device vendor of the terminal. If information about the device vendor of the terminal is consistent with the information about the device vendor in the information about the vertical federated alliance, the terminal may serve as the terminal in the first terminal set and/or the terminal in the second terminal set.

In addition, the first request may further carry information about a terminal that is expected to be used for a task of the vertical federated alliance, for example, an AF terminal identifier of the terminal that is expected to be used for the task of the vertical federated alliance.

In this application, the AF terminal identifier may be used to identify the terminal in the AF.

For the first AF, the information about the terminal that is expected to be used for the task of the vertical federated alliance may include a first identifier of the terminal that is expected to be used for the task of the vertical federated alliance. The first identifier of the terminal that is expected to be used for the task of the vertical federated alliance may be used for the first AF to determine the terminal in the first terminal set. For example, if the first identifier of the terminal that is expected to be used for the task of the vertical federated alliance is a list of expected terminals, the first AF may determine, from the list, a terminal that belongs to the first terminal set. When the first request includes the information about the federated alliance and the list of expected terminals, if a terminal of the AF is a terminal selected based on the information about the federated alliance but is not a terminal in the list of expected terminals, the terminal may not serve as a terminal in the first terminal set. Similarly, for the second AF, the information of the terminal that is expected to be used for the task of the vertical federated alliance may include a second identifier of the terminal that is expected to be used for the task of the vertical federated alliance. The second identifier of the terminal that is expected to be used for the task of the vertical federated alliance may be used for the second AF to determine the terminal in the second terminal set.

The information about the terminal that is expected to be used for the task of the vertical federated alliance may be included in the information about the vertical federated alliance, or may be a separate information element or field independent of the information about the vertical federated alliance. This is not specifically limited in this application.

It can be understood that the AF may further determine, based on the information about the vertical federated alliance and the information about the terminal that is expected to be used for the task of the vertical federated alliance, an intersection set of terminals as the first identifier of the terminal in the first terminal set of the first AF and/or the second identifier of the terminal in the second terminal set of the second AF.

Alternatively, in this example, the AF may initiate terminal determining. To be specific, in S101, the first AF may actively provide the first identifier of the terminal in the first terminal set, and/or the second AF may actively provide the second identifier of the terminal in the second terminal set. For example, the first AF and/or the second AF may send a second request to the first network element, and the second request may be used to request the first network element to determine a sample. The second request sent by the first AF may include the first identifier of the terminal in the first terminal set, and the second request sent by the second AF may include the second identifier of the terminal in the second terminal set. The second request may be initiated based on a specific time condition or event condition, for example, when time for performing a vertical federated learning task is reached or a sample collection condition for a learning task is met (for example, model training is enabled when model precision is insufficient, and in this case, a sample needs to be collected).

In a possible implementation, the second request may further include information about the vertical federated alliance, for example, an identifier of the vertical federated alliance, to identify a vertical federated alliance related to a current learning task.

In another example of S101, the first network element may obtain, from the repository network element, the first identifier of the terminal in the first terminal set of the first AF and the second identifier of the terminal in the second terminal set of the second AF. If the repository network element allocates an AF terminal identifier, after allocating the AF terminal identifier, the repository network element may store a correspondence between the AF terminal identifier and at least one of the information about the vertical federated alliance, a terminal, or an AF. The first network element may query the AF terminal identifier from the repository network element based on the information about the vertical federated alliance, for example, provide the information about the vertical federated alliance for the repository network element. The repository network element may determine the first identifier of the terminal in the first terminal set and the first identifier of the terminal in the second terminal set based on the information about the vertical federated alliance that is provided by the first network element. The repository network element may further provide the first identifier of the terminal in the first terminal set and the second identifier of the terminal in the second terminal set for the first network element.

In this application, the correspondence may alternatively be replaced with an association relationship or a mapping relationship. A correspondence between A and B may be used to determine B that corresponds to A, or used to determine A that corresponds to B.

It can be understood that the repository network element may store the first identifier and/or the second identifier of the terminal of the AF. For example, the AF registers, with the repository network element, an AF terminal identifier of a terminal managed by the AF. For a manner of determining, by the repository network element, the first identifier of the terminal in the first terminal set and the first identifier of the terminal in the second terminal set based on the information about the vertical federated alliance, refer to the manner of determining, by the AF, the first identifier of the terminal in the first terminal set and the first identifier of the terminal in the second terminal set based on the information about the vertical federated alliance. Details are not described again.

In a possible implementation, when determining the first terminal, the first network element may further provide, for the repository network element, information about a terminal that is expected to be used for a task of the vertical federated alliance, so that the repository network element selects a terminal based on the information about the terminal that is expected to be used for the task of the vertical federated alliance, to determine the first terminal.

The information provided for the repository network element may include a unique identifier, a first identifier, a second identifier, or a third identifier of the terminal that is expected to be used for the task of the vertical federated alliance.

In this application, the unique identifier of the terminal may also be a network-side identifier, and may be used to uniquely identify the terminal, for example, may be a unique identifier in the core network. The unique identifier may include an SUPI, an international mobile subscriber identity (international mobile subscriber identity, IMSI), a terminal equipment identifier (terminal equipment identifier, TEI), a permanent equipment identifier (permanent equipment identifier, PEI), or the like of the terminal. The following mainly uses the SUPI as an example of the unique identifier for description.

The third identifier may be a VFL identifier of the terminal (for example, referred to as a VFL UE ID), and is used to identify a terminal that supports vertical federated learning or the vertical federated alliance. A same terminal has a same third identifier in a plurality of AFs that support the vertical federated alliance. That is, the third identifier may be an identifier of the first terminal in a learning task of the vertical federated alliance. It can be understood that the third identifier may be universal at different granularities of the vertical federated alliance. For example, in all tasks of the alliance, identifiers of the first terminal are the third identifier.

For example, the first network element may provide, for the repository network element, the first identifier of the terminal in the first terminal set, the second identifier of the terminal in the second terminal set, and the information about the terminal that is expected to be used for the task of the vertical federated alliance. After determining at least one terminal (for example, referred to as a second terminal) that is common to both the first terminal set and the second terminal set, the repository network element selects, as the first terminal, at least one terminal from the second terminal based on the information about the terminal that is expected to be used for the task of the vertical federated alliance. For example, the first identifier, the second identifier, the unique identifier, or the third identifier of the first terminal is included in the information about the terminal that is expected to be used for the task of the vertical federated alliance. In this implementation, the AF does not need to select a terminal based on the information about the terminal that is expected to be used for the task of the vertical federated alliance, to reduce processing complexity of the AF.

As shown in Table 1, an AF1 UE ID represents the first identifier of the terminal in the first terminal set of the first AF, and an AF2 UE ID represents the second identifier of the terminal in the second terminal set of the second AF. It can be learned that an intersection set of the first terminal set and the second terminal set are terminals whose SUPIs are an SUPI2, an SUPI3, and an SUPI4. In other words, the first terminal includes the terminals whose SUPIs are the SUPI2, the SUPI3, and the SUPI4. The first network element may allocate VFL UE IDs, denoted as V1, V2, and V3, to the terminals whose SUPIs are the SUPI2, the SUPI3, and the SUPI4. The VFL UE IDs are the third identifier.

**Table 1**

| SUPI | AF1 UE ID | AF2 UE ID | VFL UE ID |
|---|---|---|---|
| SUPI1 | A1 | / | / |
| SUPI2 | A2 | B2 | V1 |
| SUPI3 | A3 | B3 | V2 |
| SUPI4 | A4 | B4 | V3 |
| SUPI5 | / | B5 | / |

The repository network element may convert the unique identifier and/or the third identifier of the terminal that is expected to be used for the task of the vertical federated alliance into an AF terminal identifier, for example, the first identifier and/or the second identifier. The repository network element may further query the AF terminal identifier of the terminal of the first AF and the AF terminal identifier of the terminal of the second AF; determine, as the first identifier of the terminal in the first terminal set of the first AF, an intersection set of the AF terminal identifier of the terminal that is expected to be used for the task of the vertical federated alliance and the AF terminal identifier of the terminal of the first AF; and determine, as the second identifier of the terminal in the second terminal set of the second AF, an intersection set of the AF terminal identifier of the terminal that is expected to be used for the task of the vertical federated alliance and the AF terminal identifier of the terminal of the second AF.

It can be understood that the repository network element may further determine, based on the information about the vertical federated alliance and the information about the terminal that is expected to be used for the task of the vertical federated alliance, an intersection set of terminals as the first identifier of the terminal in the first terminal set of the first AF and/or the second identifier of the terminal in the second terminal set of the second AF.

It can be understood that, if the first network element is an NEF, the information about the vertical federated alliance and/or the information about the terminal that is expected to be used for the task of the vertical federated alliance (for example, the unique identifier, the first identifier, the second identifier, or the third identifier of the terminal) may be from an NWDAF.

If the information, provided by the NWDAF for the NEF, about the terminal that is expected to be used for the task of the vertical federated alliance is the unique identifier or the third identifier of the terminal, the NEF may convert the unique identifier or the third identifier of the terminal that is expected to be used for the task of the vertical federated alliance into the first identifier and/or the second identifier of the terminal, and include the first identifier and/or the second identifier of the terminal in the first request. The third identifier of the terminal may be allocated to the terminal in a previous learning task. Alternatively, the third identifier may be pre-allocated by the NWDAF to the terminal in a current learning task. In this case, the NWDAF may further provide, for the NEF, a correspondence between the third identifier of the terminal and at least one of the first identifier, the second identifier, or the unique identifier; or the NWDAF may provide, for the repository network element, a correspondence between the third identifier and at least one of the first identifier, the second identifier, or the unique identifier.

It can be understood that a manner of converting, by the NEF, the unique identifier or the third identifier of the terminal that is expected to be used for the task of the vertical federated alliance into the first identifier and/or the second identifier of the terminal is, for example, as follows: The NEF sends, to a UDM, the information about the terminal that is expected to be used for the task of the vertical federated alliance: the unique identifier or the third identifier of the terminal. The repository network element maps the unique identifier or the third identifier of the terminal based on a correspondence between the unique identifier or the third identifier and the first identifier and/or the second identifier to obtain the first identifier and/or the second identifier of the terminal, and provides the first identifier and/or the second identifier of the terminal for the NEF. Alternatively, the NEF may map the unique identifier or the third identifier of the terminal based on a locally stored correspondence between the unique identifier or the third identifier of the terminal and the first identifier and/or the second identifier to obtain the first identifier and/or the second identifier of the terminal.

Alternatively, any one or more members of the vertical federated alliance may send, to the first network element, the information about the vertical federated alliance and/or the information about the terminal that is expected to be used for the task of the vertical federated alliance, to initiate a task. The member may be the first AF or the second AF, or may be a core network element or the like. This is not specifically limited. That is, the task may be triggered by a part of member AFs (for example, one AF). In this case, the first network element may determine all member AFs based on the information about the vertical federated alliance, and send the first request to a part or all of the member AFs. For example, the first request may be sent to a member AF other than the member AF that initiates the task. Optionally, the member AF that initiates the task may further provide an AF terminal identifier of a terminal set for the first network element. For example, when the first AF serves as the member AF that initiates the task, the first AF may send, to the first network element, the information about the vertical federated alliance and/or the information about the terminal that is expected to be used for the task of the vertical federated alliance, and may further send the first identifier of the terminal in the first terminal set; and the first network element may send the first request to the second AF to request to obtain the second identifier of the terminal in the second terminal set of the second AF.

In S102, the first terminal may be determined based on a unique identifier of the terminal in the first terminal set and a unique identifier of the terminal in the second terminal set. For example, the first network element may determine the unique identifier of the terminal in the first terminal set based on the first identifier of the terminal in the first terminal set, determine the unique identifier of the terminal in the second terminal set based on the second identifier of the terminal in the second terminal set, and then determine the first terminal by calculating an intersection of the unique identifier of the terminal in the first terminal set and the unique identifier of the terminal in the second terminal set.

A manner of determining, by the first network element, the unique identifier of the terminal in the first terminal set based on the first identifier of the terminal in the first terminal set is, for example, as follows: The first network element sends the first identifier of the terminal in the first terminal set to the repository network element, and the repository network element determines the unique identifier of the terminal based on a correspondence between the first identifier of the terminal and the unique identifier of the terminal, and provides the unique identifier of the terminal for the first network element. In another manner, the first network element locally stores a correspondence between the first identifier of the terminal and the unique identifier of the terminal. Therefore, the first network element may query the correspondence based on the first identifier of the terminal in the first terminal set, to determine the unique identifier of the terminal in the first terminal set.

Similarly, the first network element may obtain the unique identifier of the terminal in the second terminal set through the repository network element, or may query a correspondence between the second identifier and the unique identifier of the terminal in the first terminal set based on the second identifier of the terminal, to determine the unique identifier of the terminal in the first terminal set.

In a possible implementation, the first network element may further send the first identifier of the first terminal to the first AF, where the first identifier may be used for a vertical federated learning task. For example, the first AF may select sample information for the vertical federated learning task based on the first identifier. Similarly, the first network element may further send the second identifier of the first terminal to the second AF, where the second identifier may be used for a vertical federated learning task. For example, the second AF may select sample information for the vertical federated learning task based on the second identifier. It can be understood that the sample information is information about a sample. For example, the sample information is identification information of the sample. For example, the sample may be data of a terminal, and correspondingly, an AF terminal identifier of the terminal may be understood as the identification information of the sample. The first AF may determine related data of the vertical federated learning task based on the first identifier. Specifically, the first AF may determine, based on the first identifier, data corresponding to the first identifier used for the vertical federated learning task. For example, the data corresponding to the first identifier includes network data of a user corresponding to the first identifier and PDU session-related data. The data is used by the first AF for the vertical federated learning task, for example, used for training and/or inference of a model corresponding to the vertical federated task of the first AF.

It can be understood that, that the first network element sends a message or information to the first AF includes that the first network element sends the message or the information to the first AF through an interface or a transmission channel between the first network element and the first AF, and may further include that the first network element sends the message or the information to the first AF through another network element or communication device. For example, if the first network element is an NWDAF, the first network element may send the message or the information to the first AF through an NEF.

In a possible implementation, the first network element may further send, to the first AF, the third identifier allocated to the first terminal, and the first network element may further send, to the second AF, the third identifier allocated to the first terminal. In an example, the first network element may send the first identifier and the third identifier of the first terminal to the first AF, and the first network element may further send the second identifier and the third identifier of the first terminal to the second AF.

The third identifier may be allocated by the first network element, the repository network element, or another network element.

For example, if the third identifier is allocated by the first network element, the first network element may further send the third identifier to the repository network element after allocating the third identifier. For example, the first network element sends a correspondence between the third identifier of the first terminal and at least one of the information about the vertical federated alliance or the first identifier or the second identifier of the first terminal to the repository network element, so that the repository network element obtains and stores an association relationship between the third identifier of the first terminal and the first identifier or the second identifier of the first terminal or the information about the vertical federated alliance, to facilitate subsequent terminal searching.

If the third identifier is allocated by the repository network element, after determining the first terminal in S102, the first network element may send at least one of the unique identifier, the first identifier, or the second identifier of the first terminal to the repository network element, to request the first network element to allocate the third identifier. Correspondingly, after allocating the third identifier, the repository network element may obtain and store an association relationship between the third identifier of the first terminal and at least one of the unique identifier, the first identifier, or the second identifier of the first terminal. Optionally, the first network element may further send the information about the vertical federated alliance, to provide a correspondence between the first terminal and the vertical federated alliance, to facilitate subsequent terminal searching.

The method provided in this application is described below with reference to specific embodiments. In Embodiment 1 to Embodiment 4 below, the process in FIG. 4 and possible implementations related to FIG. 4 are described. In some cases, Embodiment 1 to Embodiment 4 may be considered as descriptions of the process in FIG. 4 and the foregoing implementations. In addition, Embodiment 1 to Embodiment 4 are example embodiments of the method provided in this application, and the embodiments should not be construed as processes that need to be strictly followed in the method provided in this application.

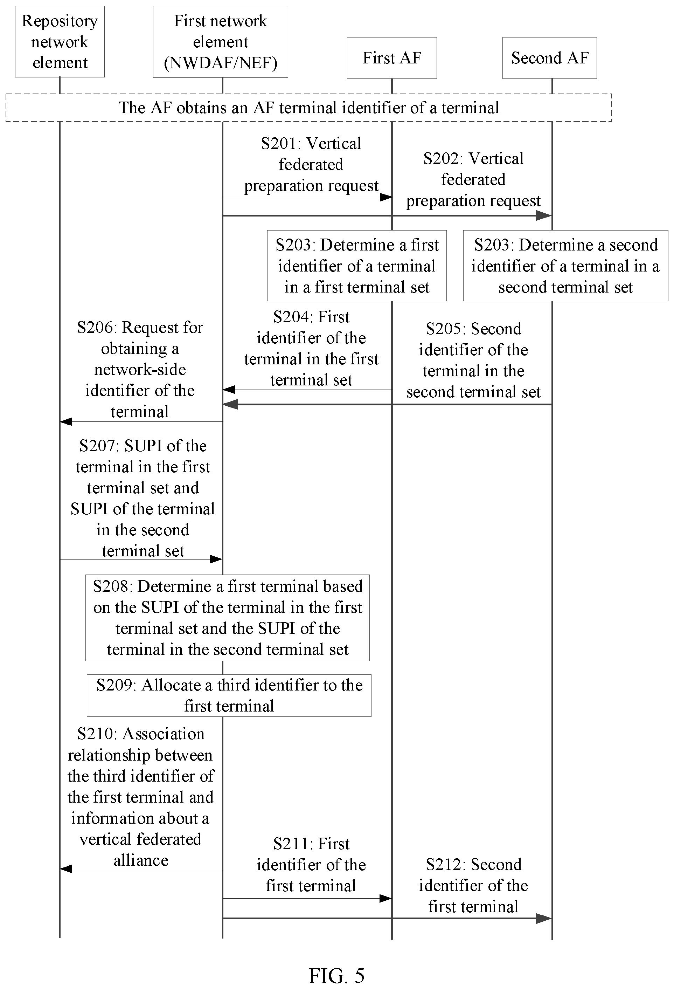

Embodiment 1: An NWDAF or an NEF serves as the foregoing first network element, the NWDAF/NEF requests a first AF to provide a first identifier of a terminal in a first terminal set, and the NWDAF/NEF requests a second AF to provide a second identifier of a terminal in a second terminal set. The method provided in this application may include the following steps shown in FIG. 5.

S201: The first network element sends a vertical federated preparation request to the first AF, where the vertical federated preparation request includes information about a vertical federated alliance and/or information about a terminal that is expected to be used for a task of the vertical federated alliance.

As described in this application, the information about the vertical federated alliance that is included in the vertical federated task request may include one or more of the following: an identifier of the federated alliance, an identifier of an analytics service corresponding to the vertical federated alliance, an identifier of an AF corresponding to the vertical federated alliance, information about a network corresponding to the vertical federated alliance, or information about a device vendor corresponding to the vertical federated alliance; and the information about the terminal that is expected to be used for the task of the vertical federated alliance may include at least one of a unique identifier, a first identifier, or a second identifier of the terminal that is expected to be used for the task of the vertical federated alliance.

It can also be considered that the information about the terminal that is expected to be used for the task of the vertical federated alliance is included in the information about the vertical federated alliance.

It can be understood that, in Embodiment 1, the information about the vertical federated alliance and/or the information about the terminal that is expected to be used for the task of the vertical federated alliance may be determined by the first network element according to a requirement of a learning task of the vertical federated alliance, and a manner of determining the information is not limited in this application. The requirement of the learning task of the vertical federated alliance may include a requirement of an analytics service (for example, an analytics identifier), a requirement of the learning task for data, a requirement of the learning task for accuracy, or the like.

The vertical federated preparation request in S201 may be an example of the first request, and the information about the vertical federated alliance in the vertical federated preparation request may be used for the first AF to determine the first identifier of the terminal in the first terminal set.

The information about the terminal that is expected to be used for the task of the vertical federated alliance may include the first identifier of the terminal that is expected to be used for the task of the vertical federated alliance.

S201 may alternatively be replaced with the following: The first network element sends, to the first AF, the information about the vertical federated alliance and/or the information about the terminal that is expected to be used for the task of the vertical federated alliance.

S202: The first network element sends a vertical federated preparation request to the second AF, where the vertical federated preparation request includes information about a vertical federated alliance and/or information about a terminal that is expected to be used for a task of the vertical federated alliance.

The vertical federated preparation request in S202 may be an example of the first request, and the information about the vertical federated alliance in the vertical federated preparation request may be used for the second AF to determine the second identifier of the terminal in the second terminal set.

The information about the terminal that is expected to be used for the task of the vertical federated alliance may include the second identifier of the terminal that is expected to be used for the task of the vertical federated alliance.

S202 may alternatively be replaced with the following: The first network element sends, to the second AF, the information about the vertical federated alliance and/or the information about the terminal that is expected to be used for the task of the vertical federated alliance.

A chronological order of performing S201 and S202 is not limited in this application.

Optionally, before S201 and/or S202, the first AF and the second AF separately obtain or determine sample information and/or sample identification information, where the sample information may be an AF terminal identifier of a terminal, terminal-related data, or the like. For example, the AF terminal identifier may include an AF-specific terminal identifier, a GPSI, an IP address, or a MAC address of the terminal.

S203: The first AF may determine the first identifier of the terminal in the first terminal set according to the vertical federated preparation request, and the second AF may determine the second identifier of the terminal in the second terminal set according to the vertical federated preparation request.

The first AF may select a terminal based on the information about the vertical federated alliance and/or the information about the terminal that is expected to be used for the task of the vertical federated alliance, to determine the terminal in the first terminal set. The second AF may select a terminal based on the information about the vertical federated alliance and/or the information about the terminal that is expected to be used for the task of the vertical federated alliance, to determine the terminal in the second terminal set. For a manner of selecting a terminal based on the information about the vertical federated alliance and/or the information about the terminal that is expected to be used for the task of the vertical federated alliance, refer to the descriptions in this application.

S204: The first AF sends the first identifier of the terminal in the first terminal set to the first network element.

The first identifier may be an AF1 UE ID of the terminal.

S205: The second AF sends the second identifier of the terminal in the second terminal set to the first network element.

The second identifier may be an AF2 UE ID of the terminal.

It can be understood that S204 and S205 may be an example implementation of S101 in the process in FIG. 4.

S206: The first network element sends a request for obtaining a network-side identifier of the terminal to a repository network element.

The network-side identifier of the UE may be a unique identifier, for example, an SUPI, or may be another identifier, for example, a TEI or a PEI.

An SUPI obtaining request may be used to request to obtain an SUPI of the terminal in the first terminal set and an SUPI of the terminal in the second terminal set.

S207: The repository network element sends the SUPI of the terminal in the first terminal set and the SUPI of the terminal in the second terminal set to the first network element.

It can be understood that S206 and S207 may be an example implementation of S102 in the process in FIG. 4.

S208: The first network element determines a first terminal based on the SUPI of the terminal in the first terminal set and the SUPI of the terminal in the second terminal set.

The first terminal is an intersection terminal of the first terminal set and the second terminal set.

S209: Optionally, the first network element allocates a third identifier to the first terminal.

For example, the third identifier is a VFL UD ID.

The third identifier may be an identifier of the first terminal in the learning task of the vertical federated alliance. It can be understood that the third identifier may be universal at different granularities of the vertical federated alliance. For example, in all tasks of the alliance, identifiers of the first terminal are the third identifier.

Alternatively, the third identifier may be allocated by an NWDAF or another network element. In this case, S209 may be skipped.

S210: Optionally, the first network element sends an association relationship between the third identifier of the first terminal and the information about the vertical federated alliance to the repository network element, so that the UDM stores information about the first terminal that supports the learning task of the vertical federated alliance. Optionally, the first network element indicates, to the repository network element, an association relationship between the third identifier of the first terminal and the information about the vertical federated alliance or a first identifier, a second identifier, or a unique identifier of the first terminal. For example, the first network element may send an SUPI and the third identifier of the first terminal, to indicate an association relationship between the SUPI and the third identifier. Therefore, the repository network element may learn of the association relationship between the SUPI and the third identifier. In addition, the repository network element has learned of a correspondence between the SUPI of the first terminal and at least one of the information about the vertical federated alliance or the first identifier or the second identifier of the first terminal. Therefore, the repository network element may learn of a correspondence between the third identifier of the first terminal and at least one of the information about the vertical federated alliance or the first identifier or the second identifier of the first terminal. Specifically, the first network element may send a list of (SUPI, VFL UE ID), where (SUPI, VFL UE ID) may indicate a correspondence between the SUPI and the VFL UE ID of the first terminal. The repository network element may determine an association relationship between the SUPI and the VFL UE ID based on the list.

S211: The first network element sends the first identifier of the first terminal to the first AF, so that the first AF determines sample data for the learning task of the vertical federated alliance based on the second identifier of the first terminal, to select a sample.

Optionally, the first network element may further send the third identifier of the first terminal to the first AF, so that the first AF learns of the third identifier of the first terminal, in other words, learns of the identifier of the first terminal in the learning task of the vertical federated alliance. For example, the first network element sends the first identifier and the third identifier of the first terminal to the first AF.

S212: The first network element sends the second identifier of the first terminal to the second AF, so that the second AF determines sample data for the learning task of the vertical federated alliance based on the second identifier of the first terminal, to select a sample.

Optionally, the first network element may further send the third identifier of the first terminal to the second AF, so that the second AF learns of the third identifier of the first terminal, in other words, learns of the identifier of the first terminal in the learning task of the vertical federated alliance. For example, the first network element sends the second identifier and the third identifier of the first terminal to the second AF.

Optionally, before S201, any one or more members of the vertical federated alliance may initiate a vertical federated task request to the first network element, to initiate a task. The vertical federated task request may include information about a vertical federated alliance and/or information about a terminal that is expected to be used for a task of the vertical federated alliance. The member may be the first AF or the second AF. That is, the task may be triggered by a part of member AFs (for example, one AF). The first network element may determine all member AFs based on the information about the vertical federated alliance, and perform S201 and/or S202. If the member AF that sends the vertical federated task request to the first network element is the first AF, the first network element may skip (or ignore) S201. In this case, the vertical federated task request may further include the first identifier of the terminal in the first terminal set. For a manner of determining the terminal in the first terminal set, refer to S203. A difference lies in that, in this case, the first AF may initiate determining of the first terminal set. Similarly, if the member AF that sends the vertical federated task request to the first network element is the second AF, the first network element may skip (or ignore) S202. In this case, the vertical federated task request may further include the second identifier of the terminal in the second terminal set. For a manner of determining the terminal in the second terminal set, refer to S204. A difference lies in that, in this case, the first AF may initiate determining of the first terminal set.

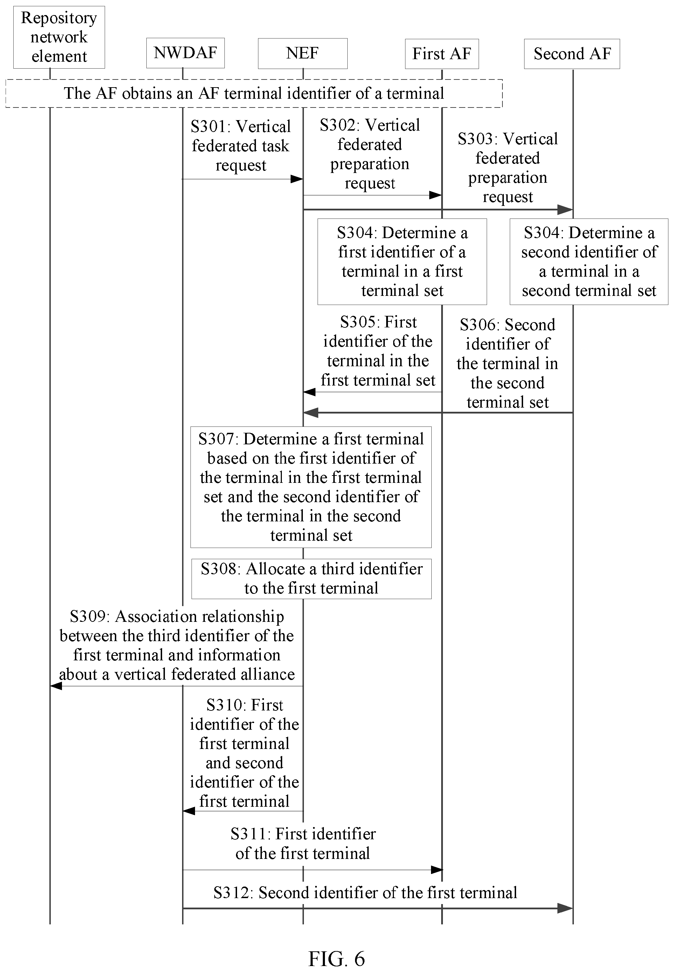

Embodiment 2: An NEF serving as a first network element requests, based on information about a vertical federated alliance and/or information about a terminal that is expected to be used for a task of the vertical federated alliance that are/is provided or preconfigured by another network element (for example, an NWDAF), a first AF to provide a first identifier of a terminal in a first terminal set, and requests a second AF to provide a second identifier of a terminal in a second terminal set. In addition, in Embodiment 2, the NEF notifies the NWDAF of a determining result of a first terminal, and the NWDAF indicates the first terminal to the first AF and the second AF. The method provided in this application may include the following steps shown in FIG. 6.

S301: The NWDAF sends a vertical federated task request to the NEF.

The vertical federated task request includes the information about the vertical federated alliance and/or the information about the terminal that is expected to be used for the task of the vertical federated alliance, and is used for the NEF to determine a terminal and/or a sample supported by the NWDAF in a current vertical federated task.

Optionally, S301 may alternatively be replaced with the following: The NWDAF sends the information about the vertical federated alliance and/or the information about the terminal that is expected to be used for the task of the vertical federated alliance.

In Embodiment 2, the NWDAF may be one of members of the vertical federated task. It can be understood that, in Embodiment 2, the information about the vertical federated alliance and/or the information about the terminal that is expected to be used for the task of the vertical federated alliance may be determined by the NWDAF according to a requirement of a learning task of the vertical federated alliance, and a manner of determining the information is not limited in this application. The requirement of the learning task of the vertical federated alliance may include a requirement of an analytics service (for example, an analytics identifier), a requirement of the learning task for data, a requirement of the learning task for accuracy, or the like.

As described in this application, the information about the vertical federated alliance that is included in the vertical federated task request may include one or more of the following: an identifier of the federated alliance, an identifier of an analytics service corresponding to the vertical federated alliance, an identifier of an AF corresponding to the vertical federated alliance, information about a network corresponding to the vertical federated alliance, or information about a device vendor corresponding to the vertical federated alliance; and the information about the terminal that is expected to be used for the task of the vertical federated alliance may include at least one of a unique identifier, a first identifier, or a second identifier of the terminal that is expected to be used for the task of the vertical federated alliance.

S302: The NEF sends a vertical federated preparation request to the first AF, where the vertical federated preparation request includes the information about the vertical federated alliance and/or the information about the terminal that is expected to be used for the task of the vertical federated alliance.

The vertical federated preparation request in S302 may be an example of the first request, and the information about the vertical federated alliance in the vertical federated preparation request may be used for the first AF to determine the first identifier of the terminal in the first terminal set.

The information about the terminal that is expected to be used for the task of the vertical federated alliance may include the first identifier of the terminal that is expected to be used for the task of the vertical federated alliance.

S302 may alternatively be replaced with the following: The first network element sends, to the first AF, the information about the vertical federated alliance and/or the information about the terminal that is expected to be used for the task of the vertical federated alliance.

S303: The NEF sends a vertical federated preparation request to the second AF, where the vertical federated preparation request includes the information about the vertical federated alliance and/or the information about the terminal that is expected to be used for the task of the vertical federated alliance.

The vertical federated preparation request in S303 may be an example of the first request, and the information about the vertical federated alliance in the vertical federated preparation request may be used for the second AF to determine the second identifier of the terminal in the second terminal set.

The information about the terminal that is expected to be used for the task of the vertical federated alliance may include the second identifier of the terminal that is expected to be used for the task of the vertical federated alliance.

S303 may alternatively be replaced with the following: The first network element sends, to the second AF, the information about the vertical federated alliance and/or the information about the terminal that is expected to be used for the task of the vertical federated alliance.

A chronological order of performing S303 and S303 is not limited in this application.

Optionally, before S302 and/or S303, the first AF and the second AF separately obtain sample information, where the sample information may be an AF terminal identifier of a terminal. For example, the AF terminal identifier may include an AF-specific terminal identifier, a GPSI, an IP address, or a MAC address of the terminal.

S304: The first AF may determine the first identifier of the terminal in the first terminal set according to the vertical federated preparation request, and the second AF may determine the second identifier of the terminal in the second terminal set according to the vertical federated preparation request.

The first AF may select a terminal based on the information about the vertical federated alliance and/or the information about the terminal that is expected to be used for the task of the vertical federated alliance, to determine the terminal in the first terminal set. The second AF may select a terminal based on the information about the vertical federated alliance and/or the information about the terminal that is expected to be used for the task of the vertical federated alliance, to determine the terminal in the second terminal set. For a manner of selecting a terminal based on the information about the vertical federated alliance and/or the information about the terminal that is expected to be used for the task of the vertical federated alliance, refer to the descriptions in this application.

S305: The first AF sends the first identifier of the terminal in the first terminal set to the NEF.

The first identifier may be an AF1 UE ID of the terminal.

S306: The second AF sends the second identifier of the terminal in the second terminal set to the NEF.

The second identifier may be an AF2 UE ID of the terminal.

It can be understood that S204 and S205 may be an example implementation of S101 in the process in FIG. 4.

S307: The NEF determines the first terminal based on the first identifier of the terminal in the first terminal set and the second identifier of the terminal in the second terminal set.

The first terminal is an intersection terminal of the first terminal set and the second terminal set.

In an example, the NEF may determine the first terminal in the manner shown in S206 to S208.

In another example, if the information about the terminal that is expected to be used for the task of the vertical federated alliance in S301 includes the first identifier, the second identifier, and the unique identifier of the terminal, in other words, there are correspondences between the unique identifier and the first identifier of the terminal and between the unique identifier and the second identifier of the terminal, the NEF may convert the first identifier of the terminal in the first terminal set into a unique identifier, and convert the second identifier of the terminal in the second terminal set into a unique identifier, and may further determine an intersection terminal of the first terminal set and the second terminal set based on the unique identifiers, to obtain the first terminal.

Similarly, if the information about the terminal that is expected to be used for the task of the vertical federated alliance in S301 includes the first identifier, the second identifier, and a third identifier of the terminal, in other words, there are correspondences between the unique identifier and the first identifier of the terminal and between the unique identifier and the second identifier of the terminal, the NEF may convert the first identifier of the terminal in the first terminal set into a third identifier, and convert the second identifier of the terminal in the second terminal set into a third identifier, and may further determine an intersection terminal of the first terminal set and the second terminal set based on the third identifiers, to obtain the first terminal.

S307 may be an example of S102.

S308: Optionally, the NEF allocates a third identifier to the first terminal.

Alternatively, the third identifier may be allocated by the NWDAF or another network element. In this case, S308 may be skipped.

S309: Optionally, the NEF sends an association relationship between the third identifier of the first terminal and the information about the vertical federated alliance to a repository network element, so that the UDM stores information about the first terminal that supports the learning task of the vertical federated alliance.

For an implementation of S308 and S309, refer to S209 and S210.

S310: The NEF sends a first identifier of the first terminal and a second identifier of the first terminal to the NWDAF.

Optionally, the NEF may send the first identifier and the second identifier of the first terminal to the NWDAF, and may further send a unique identifier and/or the third identifier of the first terminal.

Therefore, the NWDAF may learn of the information about the first terminal, so that the NWDAF indicates the first terminal to the first AF and the second AF.

S311: The NWDAF sends the first identifier of the first terminal to the first AF, so that the first AF determines sample data for the learning task of the vertical federated alliance based on the second identifier of the first terminal.

Optionally, the NWDAF may further send the third identifier of the first terminal to the first AF, so that the first AF learns of the third identifier of the first terminal, in other words, learns of an identifier of the first terminal in the learning task of the vertical federated alliance. For example, the NWDAF sends the first identifier and the third identifier of the first terminal to the first AF.

S312: The NWDAF sends the second identifier of the first terminal to the second AF, so that the second AF determines sample data for the learning task of the vertical federated alliance based on the second identifier of the first terminal.

Optionally, the NWDAF may further send the third identifier of the first terminal to the second AF, so that the second AF learns of the third identifier of the first terminal, in other words, learns of the identifier of the first terminal in the learning task of the vertical federated alliance. For example, the NWDAF sends the second identifier and the third identifier of the first terminal to the second AF.

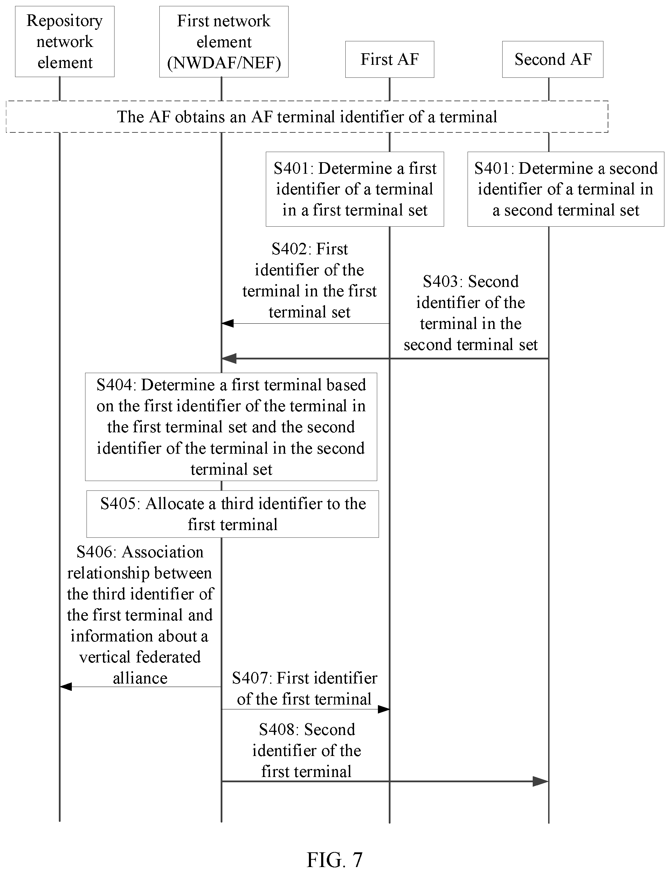

Embodiment 3: In a scenario in which an AF initiates a vertical federated information task, the AF may actively provide an AF terminal identifier of a terminal of the AF for a first network element. For example, the first network element may be an NEF or an NWDAF. The method shown in Embodiment 3 may include the following steps shown in FIG. 7.

S401: A first AF determines a first identifier of a terminal in a first terminal set, and a second AF determines a second identifier of a terminal in a second terminal set.

The first AF may select a terminal based on information about a vertical federated alliance and/or information about a terminal that is expected to be used for a task of the vertical federated alliance, to determine the terminal in the first terminal set. The second AF may select a terminal based on the information about the vertical federated alliance and/or the information about the terminal that is expected to be used for the task of the vertical federated alliance, to determine the terminal in the second terminal set. For a manner of selecting a terminal based on the information about the vertical federated alliance and/or the information about the terminal that is expected to be used for the task of the vertical federated alliance, refer to the descriptions in this application.

In Embodiment 3, the information about the vertical federated alliance and/or the information about the terminal that is expected to be used for the task of the vertical federated alliance may be configured or stored in the AF. For example, the vertical federated alliance indicates the AF to initiate a learning task at a specific periodicity or when a specific event occurs, and information about the vertical federated alliance and/or information about a terminal that is expected to be used for a task of the vertical federated alliance that correspond/corresponds to the learning task may be preconfigured in the AF of the vertical federated alliance.

For the first AF, the information about the terminal that is expected to be used for the task of the vertical federated alliance may include a first identifier of the terminal that is expected to be used for the task of the vertical federated alliance. For the second AF, the information about the terminal that is expected to be used for the task of the vertical federated alliance may include a second identifier of the terminal that is expected to be used for the task of the vertical federated alliance.

Optionally, before S401, the first AF and the second AF respectively obtain sample information, where the sample information may be an AF terminal identifier of a terminal. For example, the AF terminal identifier may include an AF-specific terminal identifier, a GPSI, an IP address, or a MAC address of the terminal.

S402: The first AF sends the first identifier of the terminal in the first terminal set to the first network element.

The first identifier may be an AF1 UE ID of the terminal.

Optionally, the first identifier of the terminal in the first terminal set may be included in a vertical federated alliance information construction request sent by the first AF to the first network element.

The first identifier of the terminal in the first terminal set may be carried in a vertical federated preparation request. The vertical federated preparation request may be an example of the second request in this application.

S403: The second AF sends the second identifier of the terminal in the second terminal set to the first network element.

The second identifier may be an AF2 UE ID of the terminal.

Optionally, the second identifier of the terminal in the second terminal set may be included in a vertical federated alliance information construction request sent by the second AF to the first network element.

The second identifier of the terminal in the second terminal set may be carried in a vertical federated preparation request. The vertical federated preparation request may be an example of the second request in this application.

It can be understood that S402 and S403 may be an example implementation of S101 in the process in FIG. 4.

S404: The first network element determines a first terminal based on the first identifier of the terminal in the first terminal set and the second identifier of the terminal in the second terminal set.

For an implementation of S404, refer to S307. Details are not described again.

S404 may be an example implementation of S102 in the process in FIG. 4.

S405: Optionally, the first network element allocates a third identifier to the first terminal.

For example, the third identifier is a VFL UD ID.

The third identifier may be an identifier of the first terminal in the learning task of the vertical federated alliance. It can be understood that the third identifier may be universal at different granularities of the vertical federated alliance. For example, in all tasks of the alliance, identifiers of the first terminal are the third identifier.

Alternatively, the third identifier may be allocated by the NWDAF or another network element. In this case, S405 may be skipped.

S406: Optionally, the first network element sends an association relationship between the third identifier of the first terminal and the information about the vertical federated alliance to a repository network element, so that the UDM stores information about the first terminal that supports the learning task of the vertical federated alliance.

For an implementation of S405 and S406, refer to S209 and S210.

S407: The first network element sends a first identifier of the first terminal to the first AF, so that the first AF determines sample data for the learning task of the vertical federated alliance based on the second identifier of the first terminal.

Optionally, the first network element may further send the third identifier of the first terminal to the first AF, so that the first AF learns of the third identifier of the first terminal, in other words, learns of the identifier of the first terminal in the learning task of the vertical federated alliance. For example, the first network element sends the first identifier and the third identifier of the first terminal to the first AF.

S408: The first network element sends a second identifier of the first terminal to the second AF, so that the second AF determines sample data for the learning task of the vertical federated alliance based on the second identifier of the first terminal.

Optionally, the first network element may further send the third identifier of the first terminal to the second AF, so that the second AF learns of the third identifier of the first terminal, in other words, learns of the identifier of the first terminal in the learning task of the vertical federated alliance. For example, the first network element sends the second identifier and the third identifier of the first terminal to the second AF.

Optionally, S407 and S408 may alternatively be replaced with S310 to S312. In this case, the NEF may perform S404 to determine the first terminal, and the NWDAF sends the first identifier of the first terminal to the first AF, and sends the second identifier of the first terminal to the second AF.

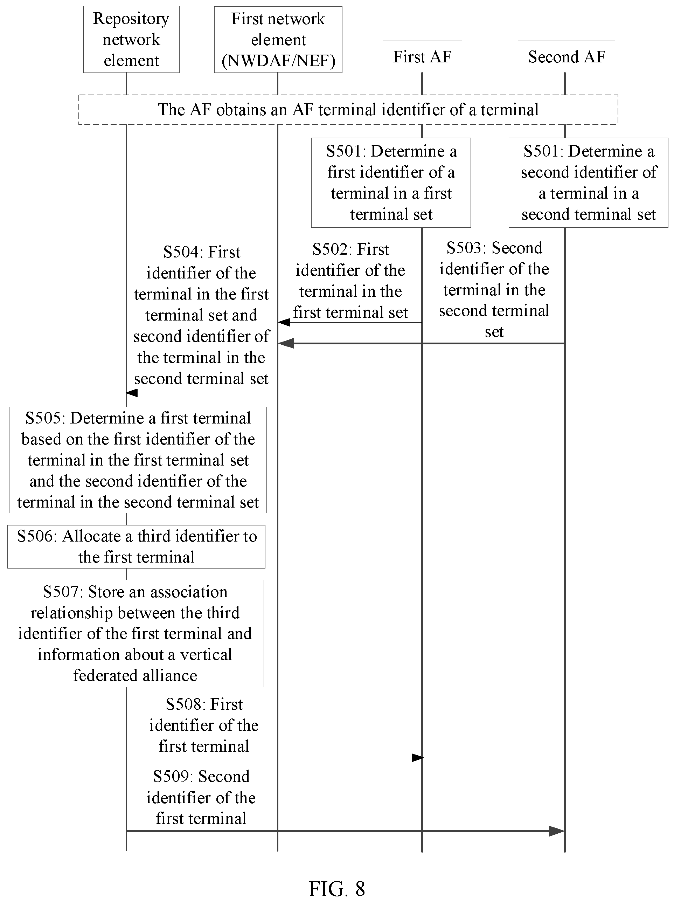

Embodiment 4: In a scenario in which an AF initiates a vertical federated information task, a repository network element may alternatively obtain an AF terminal identifier of a terminal of each AF, and determine an intersection terminal based on the AF terminal identifier of each AF, to obtain a first terminal. The AF may provide the AF terminal identifier for the repository network element through an NEF. For example, in a scenario in which a first AF and a second AF initiate a vertical federated information task, the method provided in this application may include the following steps shown in FIG. 8.

S501: The first AF determines a first identifier of a terminal in a first terminal set, and the second AF determines a second identifier of a terminal in a second terminal set.

S502: The first AF sends the first identifier of the terminal in the first terminal set to the NEF.

S503: The second AF sends the second identifier of the terminal in the second terminal set to the NEF.

For S501 to S503, refer to S401 to S403.

It can be understood that S502 and S503 may be an example implementation of S101 in the process in FIG. 4.

S504: The NEF sends the first identifier of the terminal in the first terminal set and the second identifier of the terminal in the second terminal set to the repository network element.

S505: The repository network element determines the first terminal based on the first identifier of the terminal in the first terminal set and the second identifier of the terminal in the second terminal set.

In an implementation, the repository network element may convert the first identifier of the terminal in the first terminal set into a unique identifier of the terminal, and convert the second identifier of the terminal in the second terminal set into a unique identifier of the terminal, to determine, based on the unique identifiers, an intersection terminal that is common to both the first terminal set and the second terminal set, where the intersection terminal is the first terminal.

In another implementation, the repository network element may convert the first identifier of the terminal in the first terminal set into a third identifier of the terminal, and convert the second identifier of the terminal in the second terminal set into a third identifier of the terminal, to determine, based on the third identifiers, an intersection terminal that is common to both the first terminal set and the second terminal set, where the intersection terminal is the first terminal.

S505 may be an example implementation of S102 in the process in FIG. 4.

S506: Optionally, the repository network element allocates a third identifier to the first terminal.

For example, the third identifier is a VFL UD ID.

The third identifier may be an identifier of the first terminal in a learning task of a vertical federated alliance. It can be understood that the third identifier may be universal at different granularities of the vertical federated alliance. For example, in all tasks of the alliance, identifiers of the first terminal are the third identifier.

Alternatively, the third identifier may be allocated by an NWDAF or another network element. In this case, S405 may be skipped.

S507: Optionally, the repository network element stores an association relationship between the third identifier of the first terminal and information about the vertical federated alliance, so that the UDM stores information about the first terminal that supports the learning task of the vertical federated alliance.

S508: The repository network element sends a first identifier of the first terminal to the first AF, so that the first AF determines sample data for the learning task of the vertical federated alliance based on the second identifier of the first terminal.

The repository network element may send the first identifier of the first terminal to the first AF through the NEF.

Optionally, the repository network element may further send the third identifier of the first terminal to the first AF, so that the first AF learns of the third identifier of the first terminal, in other words, learns of the identifier of the first terminal in the learning task of the vertical federated alliance. For example, the repository network element sends the first identifier and the third identifier of the first terminal to the first AF.

S509: The repository network element sends a second identifier of the first terminal to the second AF, so that the second AF determines sample data for the learning task of the vertical federated alliance based on the second identifier of the first terminal.

Optionally, the repository network element may further send the third identifier of the first terminal to the second AF, so that the second AF learns of the third identifier of the first terminal, in other words, learns of the identifier of the first terminal in the learning task of the vertical federated alliance. For example, the repository network element sends the second identifier and the third identifier of the first terminal to the second AF.

In Embodiment 4, the NEF may alternatively be replaced with the NWDAF.

It can be understood that, in Embodiment 1 to Embodiment 4, an example in which an AF corresponding to the vertical federated alliance includes the first AF and the second AF is used for description. For an implementation in a case in which the vertical federated alliance includes more AFs, refer to the foregoing descriptions. Details are not described again in this application.

In another sample determining method provided in this application, a repository network element may obtain information about a vertical federated alliance, and determine, based on the information about the vertical federated alliance, an AF terminal identifier of a terminal of each AF in the vertical federated alliance.

The AF terminal identifier of the terminal may be registered by the AF with the repository network element or pre-allocated by a network element (for example, the repository network element) in a network. An AF terminal identifier of a terminal of an AF indicates that the AF may use related data (for example, sample data) corresponding to the AF terminal identifier to perform a vertical federated task, in other words, the AF is authorized by a terminal corresponding to the AF terminal identifier to use data of the terminal to perform a vertical federated task. Alternatively, an AF terminal identifier of a terminal of an AF indicates that the AF may use, in a vertical federated task corresponding to the vertical federated alliance, related data corresponding to the AF terminal identifier. Therefore, when a learning task of the vertical federated alliance needs to be performed, a first network element and/or at least one AF corresponding to the vertical federated alliance may provide information about the vertical federated alliance for the repository network element, and the repository network element determines a terminal in a first terminal set and a terminal in a second terminal set based on the information about the vertical federated alliance. The AF corresponding to the vertical federated alliance may include a plurality of AFs, and one or more of the AFs may provide the information about the vertical federated alliance for the repository network element. In other words, not all AFs corresponding to the vertical federated alliance are required to provide the information about the vertical federated alliance for the repository network element, to reduce signaling overheads. Optionally, the AF may provide the information about the vertical federated alliance for the repository network element through an NEF.

The information about the vertical federated alliance may include one or more of the following: an identifier of the federated alliance, an identifier of an analytics service corresponding to the vertical federated alliance, an identifier of the AF corresponding to the vertical federated alliance, information about a network corresponding to the vertical federated alliance, or information about a device vendor corresponding to the vertical federated alliance. In addition, it can also be considered that the information about the vertical federated alliance includes information about a terminal that is expected to be used for a task of the vertical federated alliance.

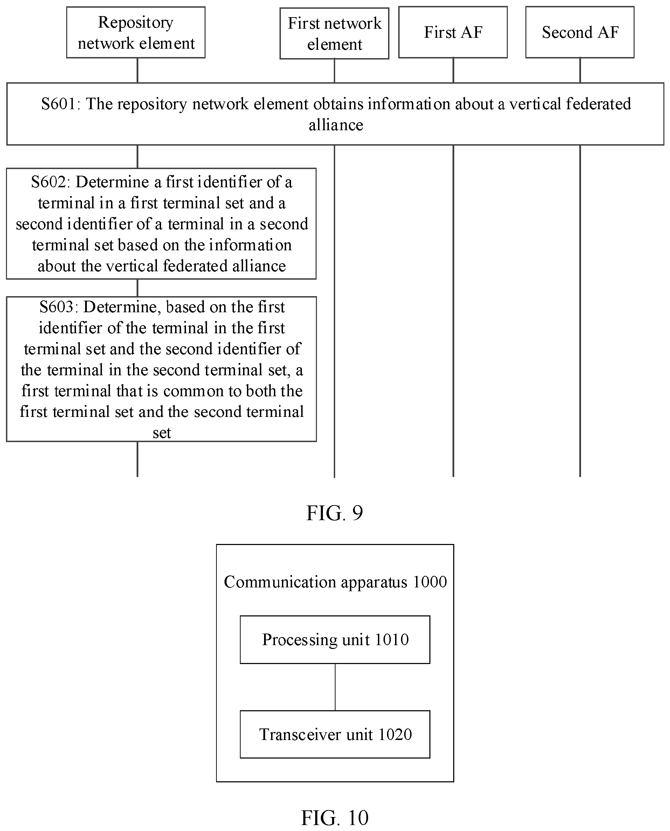

As shown in FIG. 9, for example, AFs in a vertical federated alliance include a first AF and a second AF. In S601, a repository network element may obtain information about the vertical federated alliance. In S602, the repository network element may determine a first identifier of a terminal in a first terminal set of the first AF and a second identifier of a terminal in a second terminal set of the second AF based on the information about the vertical federated alliance.

In a possible implementation, in this embodiment, the repository network element may determine, based on the first identifier of the terminal in the first terminal set and the second identifier of the terminal in the second terminal set, a first terminal that is common to both the first terminal set and the second terminal set, as shown in S603 in FIG. 9. The repository network element may further notify a first network element of the first identifier of the first terminal and the second identifier of the first terminal, so that the first network element sends the first identifier of the first terminal to the first AF and/or sends the second identifier of the first terminal to the second AF. Alternatively, after determining the first terminal, the repository network element may send the first identifier of the first terminal to the first AF and/or send the second identifier of the first terminal to the second AF.

In another possible implementation, the repository network element may alternatively provide the first identifier of the terminal in the first terminal set and the second identifier of the terminal in the second terminal set for a first network element, and the first network element determines the first terminal based on the first identifier of the terminal in the first terminal set and the second identifier of the terminal in the second terminal set. For example, refer to the descriptions in S102. Optionally, the first network element may subsequently send the first identifier of the first terminal to the first AF and/or send the second identifier of the first terminal to the second AF. For an implementation, refer to the descriptions in this application. Additionally or alternatively, the first network element may allocate a third identifier to the first terminal. For details, refer to the descriptions of allocating the third identifier by the first network element in related embodiments of this application.

In FIG. 9, for example, the repository network element determines the first terminal, and the AFs corresponding to the vertical federated alliance include the first AF and the second AF. In FIG. 9, the repository network element may obtain the information about the vertical federated alliance, and determine the first identifier of the terminal in the first terminal set of the first AF and the second identifier of the terminal in the first terminal set of the second AF based on the information about the vertical federated alliance. The repository network element may store subscription information of a terminal, and therefore may learn of a vertical federated alliance supported by the terminal. In addition, the repository network element may further learn of an AF to which the terminal belongs. Therefore, when obtaining information about a vertical federated alliance that is provided by the first AF, the repository network element may query, based on the information about the vertical federated alliance and an identifier of the first AF, a terminal supporting the vertical federated alliance in the first AF, that is, obtain the first terminal set; and when obtaining information about a vertical federated alliance that is provided by the second AF, the repository network element may query, based on the information about the vertical federated alliance and an identifier of the second AF, a terminal supporting the vertical federated alliance in the second AF, that is, obtain the second terminal set.

Optionally, the repository network element may further determine the first terminal based on the first identifier of the terminal in the first terminal set and the second identifier of the terminal in the second terminal set. The first terminal may be a terminal included in the first terminal set and the second terminal set. For example, the repository network element may determine, based on a unique identifier of the terminal in the first terminal set and a unique identifier of the terminal in the second terminal set, an intersection terminal with a same unique identifier, where the intersection terminal is the first terminal. For another example, the repository network element may determine, based on a third identifier of the terminal in the first terminal set and a third identifier of the terminal in the second terminal set, an intersection terminal with a same third identifier, where the intersection terminal is the first terminal.

In addition, in this embodiment, the repository network element may allocate the third identifier to the first terminal. Alternatively, when an NWDAF or an NEF allocates the third identifier, the repository network element may receive the third identifier of the first terminal. For example, when the NWDAF or the NEF allocates the third identifier, the repository network element may send the unique identifier of the first terminal to the NWDAF or the NEF, and receive the first identifier and the third identifier of the first terminal from the NWDAF or the NEF.

According to the embodiment shown in FIG. 9, the repository network element may send the first identifier of the first terminal to the first AF and/or send the second identifier of the first terminal to the second AF through the NEF. For example, the repository network element sends the identifier of the first AF and the first identifier (or the first identifier and the third identifier) of the first terminal to the NEF, and the NEF may send the first identifier (or the first identifier and the third identifier) of the first terminal to the first AF based on the identifier of the first AF. In addition, the repository network element sends the identifier (or the second identifier and the third identifier) of the second AF and the second identifier of the first terminal to the NEF, and the NEF may send the second identifier (or the second identifier and the third identifier) of the first terminal to the second AF based on the identifier of the second AF.

In embodiments of this application, a plurality of AFs may correspond to a same vertical federated alliance, and the AFs are not limited to the first AF and the second AF in this application. When the AFs corresponding to the vertical federated alliance include more AFs (for example, a third AF) different from the first AF and the second AF, the first terminal in this application may be an intersection terminal of terminal sets of all AFs corresponding to the vertical federated alliance. In this case, for a manner of determining the first terminal, refer to the manner of determining the intersection set of the terminal in the first terminal set and the terminal in the second terminal set. Details are not described again.

It can be understood that, to implement the functions in the foregoing embodiments, the first network element, the first AF, the second AF, or the repository network element may include corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

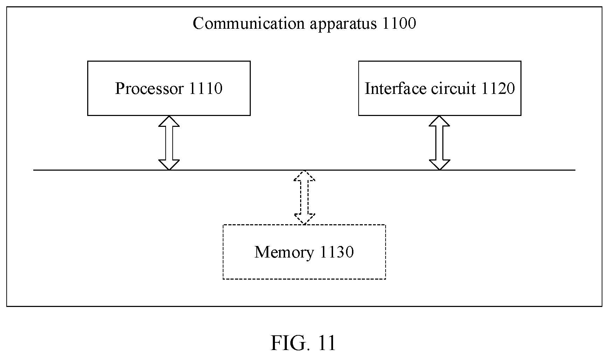

FIG. 10 and FIG. 11 are diagrams of possible structures of communication apparatuses according to embodiments of this application. The communication apparatuses may be configured to implement the functions of the first network element, the first AF, the second AF, or the repository network element in the foregoing method embodiments, and therefore can also achieve the beneficial effects of the foregoing method embodiments. The first network element is, for example, an NEF or an NWDAF. The repository network element is, for example, a UDM, a UDR, or an ADRF.

As shown in FIG. 10, a communication apparatus 1000 includes a processing unit 1010 and a transceiver unit 1020. The communication apparatus 1000 is configured to implement the functions of the first network element, the first AF, the second AF, or the repository network element in the method embodiment shown in any one of FIG. 4 to FIG. 9.

When the communication apparatus 1000 is configured to implement the functions of the first network element in the method embodiment shown in FIG. 4, the transceiver unit 1020 is configured to obtain a first identifier of a terminal in a first terminal set of a first AF and obtain a second identifier of a terminal in a second terminal set of a second AF, and the processing unit 1010 may be configured to determine a first terminal based on the first identifier of the terminal in the first terminal set and the second identifier of the terminal in the second terminal set.

When the communication apparatus 1000 is configured to implement the functions of the first AF in the method embodiment shown in FIG. 4, the transceiver unit 1020 may be configured to send a first identifier of a terminal in a first terminal set, and may be further configured to receive a first identifier of a first terminal. Optionally, the processing unit 1010 may be configured to determine the terminal in the first terminal set, for example, determine the terminal in the first terminal set based on information about a vertical federated alliance and/or information about a terminal that is expected to be used for a task of the vertical federated alliance. When the communication apparatus 1000 is configured to implement the functions of the second AF in the method embodiment shown in FIG. 4, the transceiver unit 1020 may be configured to send a second identifier of a terminal in a second terminal set, and may be further configured to receive a second identifier of a first terminal. Optionally, the processing unit 1010 may be configured to determine the terminal in the second terminal set, for example, determine the terminal in the second terminal set based on information about a vertical federated alliance and/or information about a terminal that is expected to be used for a task of the vertical federated alliance.

When the communication apparatus 1000 is configured to implement the functions of the repository network element in the method embodiment shown in FIG. 9, the transceiver unit 1020 is configured to obtain information about a vertical federated alliance; the processing unit 1010 may be configured to determine a first identifier of a terminal in a first terminal set of a first AF and obtain a second identifier of a terminal in a second terminal set of a second AF based on the information about the vertical federated alliance; and the processing unit 1010 may be configured to determine a first terminal based on the first identifier of the terminal in the first terminal set and the second identifier of the terminal in the second terminal set.

When the communication apparatus 1000 is configured to implement the functions of the first AF in the method embodiment shown in FIG. 9, the transceiver unit 1020 may be configured to send information about a vertical federated alliance, and may be further configured to receive a first identifier of a first terminal. When the communication apparatus 1000 is configured to implement the functions of the second AF in the method embodiment shown in FIG. 9, the transceiver unit 1020 may be configured to send information about a vertical federated alliance, and may be further configured to receive a second identifier of a first terminal.

For more detailed descriptions of the processing unit 1010 and the transceiver unit 1020, refer to related descriptions in the method embodiment shown in any one of FIG. 4 to FIG. 9. For example, for technical terms in the foregoing actions of the processing unit 1010 and the transceiver unit 1020, refer to the descriptions in the foregoing method embodiments. Details are not described again.

As shown in FIG. 11, a communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions to be executed by the processor 1110, or store input data needed for running instructions by the processor 1110, or store data generated after the processor 1110 runs instructions.

When the communication apparatus 1100 is configured to implement the method shown in any one of FIG. 4 to FIG. 9, the processor 1110 is configured to implement the functions of the processing unit 1010, and the interface circuit 1120 is configured to implement the functions of the transceiver unit 1020.

When the communication apparatus is a chip used in the first network element, the first AF, the second AF, or the repository network element, the chip implements the functions of the first network element, the first AF, the second AF, or the repository network element in the foregoing method embodiments. The chip may receive, through another module (for example, a radio frequency module, an antenna, or a communication interface) in the first network element, the first AF, the second AF, or the repository network element, information sent by another network element or device to the first network element, the first AF, the second AF, or the repository network element. Alternatively, the chip sends information to another module (for example, a radio frequency module, an antenna, or an interface) in the first network element, the first AF, the second AF, or the repository network element, where the information is sent by the first network element, the first AF, the second AF, or the repository network element to another network element or device.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a read-only memory (compact disc read-only memory, CD-ROM), or any other form of storage medium well-known in the art. For example, the storage medium is coupled to the processor, so that the processor can read information from the storage medium and write information to the storage medium. The storage medium may alternatively be a component of the processor. The processor and the storage medium may be located in an ASIC. In addition, the ASIC may be located in the first network element, the first AF, the second AF, or the repository network element. The processor and the storage medium may alternatively be included in the first network element, the first AF, the second AF, or the repository network element as discrete components.

An embodiment of this application further provides a communication system, including one or more network elements or apparatuses for implementing the first network element, the first AF, the second AF, or the repository network element in the foregoing method embodiments.

An embodiment of this application further provides a computer-readable storage medium. The computer-readable storage medium is configured to store a computer program or instructions. When the computer program or the instructions are run, the method shown in the foregoing method embodiments is implemented.

An embodiment of this application further provides a computer program product. When the computer program product runs on a computer, the method shown in the foregoing method embodiments is implemented.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. When the computer programs or the instructions are loaded and executed on a computer, all or some of the processes or the functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In the descriptions of this application, the terms "first", "second", and the like are merely intended for distinguishing in the descriptions, but shall not be construed as indicating or implying relative importance or indicating or implying an order. It should be noted that an appearance sequence of first, second, and the like is not limited in this application. For example, second may appear before first. This is not limited in this application.

In the descriptions of this application, "at least one (type)" means one (type) or more (types), and a plurality of (types) means two (types) or more (types). "At least one of the following items" or a similar expression thereof indicates any combination of the terms, including one of the items or any combination of a plurality of the terms. For example, at least one of a, b, or c may indicate a, b, c, a and b, a and c, b and c, or a, b, and c, where a, b, and c may be in a singular form or a plural form.. In the descriptions of this application, "/" indicates "or". For example, a/b indicates a or b.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It can be understood that various numbers in embodiments of this application are merely intended for differentiation for ease of description, but not to limit the scope of embodiments of this application. Sequence numbers of the foregoing processes do not mean an execution sequence, and an execution sequence of the processes should be determined based on functions and internal logic of the processes.

## Claims

1. A sample determining method, comprising:
obtaining a first identifier of a terminal in a first terminal set of a first application function AF of a vertical federated alliance, wherein the terminal in the first terminal set is a terminal that is supported by the first AF and that is used for a task of the vertical federated alliance;
obtaining a second identifier of a terminal in a second terminal set of a second AF of the vertical federated alliance, wherein the terminal in the second terminal set is a terminal that is supported by the second AF and that is used for a task of the vertical federated alliance; and
determining, based on the first identifier of the terminal in the first terminal set and the second identifier of the terminal in the second terminal set, a first terminal that is common to both the first terminal set and the second terminal set, wherein data of the first terminal is used for a task of the vertical federated alliance.

2. The method according to claim 1, wherein the task comprises training and/or inference.

3. The method according to claim 1 or 2, wherein the first identifier of the first terminal is used for the first AF to select a sample, and the second identifier of the first terminal is used for the second AF to select a sample.

4. The method according to any one of claims 1 to 3, wherein determining the first terminal based on the first identifier of the terminal in the first terminal set and the second identifier of the terminal in the second terminal set comprises:
determining a subscription permanent identifier SUPI of the terminal in the first terminal set based on the first identifier of the terminal in the first terminal set;
determining an SUPI of the terminal in the second terminal set based on the second identifier of the terminal in the second terminal set; and
determining the first terminal based on the SUPI of the terminal in the first terminal set and the SUPI of the terminal in the second terminal set.

5. The method according to claim 4, wherein determining the first terminal based on the SUPI of the terminal in the first terminal set and the SUPI of the terminal in the second terminal set comprises:
determining the first terminal based on an intersection set of the SUPI of the terminal in the first terminal set and the SUPI of the terminal in the second terminal set.

6. The method according to any one of claims 1 to 5, wherein the method further comprises:
sending the first identifier of the first terminal to the first AF; and
sending the second identifier of the first terminal to the second AF.

7. The method according to any one of claims 1 to 5, wherein the method further comprises:
sending, to the first AF and the second AF, a third identifier allocated to the first terminal.

8. The method according to claim 7, wherein the method further comprises:
sending the third identifier of the first terminal and at least one of the following information to a repository network element:
an identifier of the vertical federated alliance; or
an identifier of an analytics service corresponding to the vertical federated alliance; or
information about an AF corresponding to the vertical federated alliance; or
information about a public land mobile network PLMN corresponding to the vertical federated alliance; or
information about a device vendor corresponding to the vertical federated alliance; or
the first identifier of the first terminal; or
the second identifier of the first terminal.

9. The method according to any one of claims 1 to 8, wherein the method further comprises:
sending information about the vertical federated alliance to the first AF, wherein the information about the vertical federated alliance is used to determine the terminal in the first terminal set; and/or
sending information about the vertical federated alliance to the second AF, wherein the information about the vertical federated alliance is used to determine the terminal in the second terminal set.

10. The method according to any one of claims 1 to 9, wherein the method further comprises:
sending information about the vertical federated alliance to the repository network element, wherein the information about the vertical federated alliance is used to determine the terminal in the first terminal set and/or the terminal in the second terminal set; and
obtaining the first identifier of the terminal in the first terminal set of the first AF of the vertical federated alliance comprises:
receiving the first identifier of the terminal in the first terminal set from the repository network element; and/or
obtaining the second identifier of the terminal in the second terminal set of the second AF of the vertical federated alliance comprises:
receiving the second identifier of the terminal in the second terminal set from the repository network element.

11. The method according to claim 9 or 10, wherein the method further comprises:
receiving information about the vertical federated alliance from a network data analytics function.

12. The method according to any one of claims 9 to 11, wherein the information about the vertical federated alliance comprises at least one of the following information:
the identifier of the vertical federated alliance; or
the identifier of the analytics service corresponding to the vertical federated alliance; or
an identifier of the AF corresponding to the vertical federated alliance; or
the PLMN corresponding to the vertical federated alliance; or
information about the device vendor corresponding to the vertical federated alliance; or
information about a terminal that is expected to be used for a task of the vertical federated alliance.

13. The method according to claim 12, wherein the information about the vertical federated alliance comprises the information about the terminal that is expected to be used for the task of the vertical federated alliance, and the information about the terminal that is expected to be used for the task of the vertical federated alliance comprises an SUPI of the terminal that is expected to be used for the task of the vertical federated alliance; and
the method further comprises:
determining, based on the SUPI of the terminal that is expected to be used for the task of the vertical federated alliance, a first identifier of the terminal that is expected to be used for the task of the vertical federated alliance and/or a second identifier of the terminal that is expected to be used for the task of the vertical federated alliance.

14. The method according to claim 13, wherein determining, based on the SUPI of the terminal that is expected to be used for the task of the vertical federated alliance, the first identifier of the terminal that is expected to be used for the task of the vertical federated alliance and/or the second identifier of the terminal that is expected to be used for the task of the vertical federated alliance comprises:
sending, to the repository network element, the SUPI of the terminal that is expected to be used for the task of the vertical federated alliance; and
receiving, from the repository network element, the first identifier of the terminal that is expected to be used for the task of the vertical federated alliance and/or the second identifier of the terminal that is expected to be used for the task of the vertical federated alliance.

15. The method according to claim 13, wherein determining, based on the SUPI of the terminal that is expected to be used for the task of the vertical federated alliance, the first identifier of the terminal that is expected to be used for the task of the vertical federated alliance and/or the second identifier of the terminal that is expected to be used for the task of the vertical federated alliance comprises:
determining, based on a correspondence between the SUPI and the first identifier of the terminal that is expected to be used for the task of the vertical federated alliance, the first identifier of the terminal that is expected to be used for the task of the vertical federated alliance; and/or
determining, based on a correspondence between the SUPI and the second identifier of the terminal that is expected to be used for the task of the vertical federated alliance, the second identifier of the terminal that is expected to be used for the task of the vertical federated alliance.

16. The method according to claim 4, wherein determining the SUPI of the terminal in the first terminal set based on the first identifier of the terminal in the first terminal set comprises:
sending the first identifier of the terminal in the first terminal set to a repository network element; and
receiving the SUPI of the terminal in the first terminal set from the repository network element; and/or
determining the SUPI of the terminal in the second terminal set based on the second identifier of the terminal in the second terminal set comprises:
sending the second identifier of the terminal in the second terminal set to a repository network element; and
receiving the SUPI of the terminal in the second terminal set from the repository network element.

17. The method according to claim 4, wherein determining the SUPI of the terminal in the first terminal set based on the first identifier of the terminal in the first terminal set comprises:
determining, based on a correspondence between the first identifier and the SUPI of the terminal in the first terminal set, the SUPI corresponding to the first identifier of the terminal in the first terminal set; and/or
determining the SUPI of the terminal in the second terminal set based on the second identifier of the terminal in the second terminal set comprises:
determining, based on a correspondence between the second identifier and the SUPI of the terminal in the second terminal set, the SUPI corresponding to the second identifier of the terminal in the second terminal set.

18. A sample determining method, applied to a first AF of a vertical federated alliance, and comprising:
sending a first identifier of a terminal in a first terminal apparatus, wherein the terminal in the first terminal set is a terminal that is supported by the first AF and that is used for a task of the vertical federated alliance; and
receiving a first identifier of a first terminal from a network exposure function, wherein the first terminal is a terminal that is determined based on the first identifier of the first terminal in the first terminal set and a second identifier of a terminal in a second terminal set of a second AF of the vertical federated alliance and that is common to both the first terminal set and the second terminal set, and data of the first terminal is used for a task of the vertical federated alliance.

19. The method according to claim 18, wherein the task comprises training and/or inference.

20. The method according to claim 18 or 19, wherein the first identifier of the first terminal is used for the first AF to select a sample, and the second identifier of the first terminal is used for the second AF to select a sample.

21. The method according to any one of claims 18 to 20, wherein the method further comprises:
receiving information about the vertical federated alliance, wherein the information about the vertical federated alliance is used to determine the terminal in the first terminal set.

22. The method according to claim 21, wherein the information about the vertical federated alliance comprises at least one of the following information:
an identifier of the vertical federated alliance; or
an identifier of an analytics service corresponding to the vertical federated alliance; or
an identifier of an AF corresponding to the vertical federated alliance; or
a PLMN corresponding to the vertical federated alliance; or
information about a device vendor corresponding to the vertical federated alliance.

23. The method according to any one of claims 18 to 22, wherein the method further comprises:
receiving a third identifier allocated to the first terminal.

24. A sample determining method, comprising:
obtaining information about a vertical federated alliance;
determining a first identifier of a terminal in a first terminal set of a first AF based on the information about the vertical federated alliance, wherein the terminal in the first terminal set is a terminal that is supported by the first AF and that is used for a task of the vertical federated alliance;
determining a second identifier of a terminal in a second terminal set of a second AF based on the information about the vertical federated alliance, wherein the terminal in the second terminal set is a terminal that is supported by the second AF and that is used for a task of the vertical federated alliance; and
determining, based on the first identifier of the terminal in the first terminal set and the second identifier of the terminal in the second terminal set, a first terminal that is common to both the first terminal set and the second terminal set, wherein data of the first terminal is used for a task of the vertical federated alliance.

25. The method according to claim 24, wherein the task comprises training and/or inference.

26. The method according to claim 24 or 25, wherein the first identifier of the first terminal is used for the first AF to select a sample, and the second identifier of the first terminal is used for the second AF to select a sample.

27. The method according to any one of claims 24 to 26, wherein determining, based on the first identifier of the terminal in the first terminal set and the second identifier of the terminal in the second terminal set, the first terminal that is common to both the first terminal set and the second terminal set comprises:
determining an SUPI of the terminal in the first terminal set based on the first identifier of the terminal in the first terminal set;
determining an SUPI of the terminal in the second terminal set based on the second identifier of the terminal in the second terminal set; and
determining the first terminal based on the SUPI of the terminal in the first terminal set and the SUPI of the terminal in the second terminal set.

28. The method according to claim 27, wherein determining the first terminal based on the SUPI of the terminal in the first terminal set and the SUPI of the terminal in the second terminal set comprises:
determining the first terminal based on an intersection set of the SUPI of the terminal in the first terminal set and the SUPI of the terminal in the second terminal set.

29. The method according to any one of claims 24 to 28, wherein obtaining the information about the vertical federated alliance comprises:
receiving the information about the vertical federated alliance from a network data analytics function; or
receiving the information about the vertical federated alliance from a network exposure function; or
receiving the information about the vertical federated alliance from the first AF; or
receiving the information about the vertical federated alliance from the second AF.

30. The method according to any one of claims 24 to 29, wherein the information about the vertical federated alliance comprises at least one of the following information:
an identifier of the vertical federated alliance; or
an identifier of an analytics service corresponding to the vertical federated alliance; or
an identifier of an AF corresponding to the vertical federated alliance; or
a PLMN corresponding to the vertical federated alliance; or
information about a device vendor corresponding to the vertical federated alliance; or
information about a terminal that is expected to be used for a task of the vertical federated alliance.

31. The method according to any one of claims 24 to 30, wherein the method further comprises:
sending the first identifier of the first terminal and an identifier of the first AF to the network exposure function; and/or
sending the second identifier of the first terminal and an identifier of the second AF to the network exposure function.

32. The method according to claim 31, wherein the method is applied to the network exposure function, and the method further comprises:
receiving the first identifier of the first terminal and the identifier of the first AF from the repository network element;
sending the first identifier of the first terminal to the first AF based on the identifier of the first AF;
receiving the second identifier of the first terminal and the identifier of the second AF from the repository network element; and
sending the second identifier of the first terminal to the second AF based on the identifier of the second AF.

33. A sample determining method, comprising:
sending information about a vertical federated alliance, wherein the information about the vertical federated alliance is used to determine a first identifier of a first terminal in a first terminal set of a first AF, and an AF corresponding to the vertical federated alliance comprises the first AF; and
receiving the first identifier of the first terminal from a network exposure function, wherein the first terminal is a terminal that is determined based on the first identifier of the first terminal in the first terminal set and a second identifier of a terminal in a second terminal set of a second AF of the vertical federated alliance and that is common to both the first terminal set and the second terminal set, and data of the first terminal is used for a task of the vertical federated alliance.

34. The method according to claim 33, wherein the task comprises training and/or inference.

35. The method according to claim 33 or 34, wherein the first identifier of the first terminal is used for the first AF to select a sample, and the second identifier of the first terminal is used for the second AF to select a sample.

36. The method according to any one of claims 33 to 35, wherein the method further comprises:
receiving a third identifier allocated to the first terminal.

37. The method according to any one of claims 33 to 36, wherein the information about the vertical federated alliance comprises at least one of the following information:
an identifier of the vertical federated alliance; or
an identifier of an analytics service corresponding to the vertical federated alliance; or
an identifier of the AF corresponding to the vertical federated alliance; or
a PLMN corresponding to the vertical federated alliance; or
information about a device vendor corresponding to the vertical federated alliance.

38. A communication apparatus, comprising a unit or a module for performing the method according to any one of claims 1 to 17, or comprising a unit or a module for performing the method according to any one of claims 18 to 23, or comprising a unit or a module for performing the method according to any one of claims 24 to 32, or comprising a unit or a module for performing the method according to any one of claims 33 to 37.

39. A communication apparatus, comprising a processor, wherein the processor is configured to execute a computer program or instructions, to implement the method according to any one of claims 1 to 17, or implement the method according to any one of claims 18 to 23, or implement the method according to any one of claims 24 to 32, or implement the method according to any one of claims 33 to 37.

40. A computer-readable storage medium, wherein the storage medium stores a computer program or instructions, and when the computer program or the instructions are executed by a communication apparatus, the method according to any one of claims 1 to 17 is implemented, or the method according to any one of claims 18 to 23 is implemented, or the method according to any one of claims 24 to 32 is implemented, or the method according to any one of claims 33 to 37 is implemented.

41. A computer program product, wherein when the computer program product is executed by a computer, the computer is enabled to perform the method according to any one of claims 1 to 17, or perform the method according to any one of claims 18 to 23, or perform the method according to any one of claims 24 to 32, or perform the method according to any one of claims 33 to 37.

42. A communication system, comprising:
a first network element, configured to perform the method according to any one of claims 1 to 17; and
a first AF, configured to perform the method according to any one of claims 18 to 23.

43. A communication system, comprising:
a repository network element, configured to perform the method according to any one of claims 24 to 32; and
a first AF, configured to perform the method according to any one of claims 33 to 37.
